# EUROPÄISCHE PATENTSCHRIFT

(11) **EP 3 493 946 B1**
(45) Veröffentlichungstag und Bekanntmachung des Hinweises auf die Patenterteilung: **28.06.2023**
(21) Anmeldenummer: 17776949.4
(22) Anmeldetag: 11.09.2017
(51) Int. Cl.: B23Q 7/00, B23Q 7/08

(54) **SYSTEM MIT EINER WERKZEUGMASCHINE UND EINER AUFFANGVORRICHTUNG, AUFFANGVORRICHTUNG HIERFÜR SOWIE AUFFANGVERFAHREN FÜR IN EINER WERKZEUGMASCHINE BEARBEITETE WERKSTÜCKE**
SYSTEM COMPRISING A MACHINE TOOL AND A CATCHING APPARATUS, CATCHING APPARATUS FOR THE SAME, AND CATCHING METHOD FOR WORKPIECES MACHINED IN A MACHINE TOOL
SYSTÈME COMPRENANT UNE MACHINE-OUTIL ET UN DISPOSITIF DE COLLECTE, DISPOSITIF DE COLLECTE CORRESPONDANT ET PROCÉDÉ DE COLLECTE DE PIÈCES USINÉES DANS UNE MACHINE-OUTIL

(30) Priorität: 03.11.2016 DE 102016121028
(43) Veröffentlichungstag der Anmeldung: 12.06.2019
(73) Patentinhaber: Ezu-Metallwaren GmbH & Co. KG, 78598 Königsheim (DE)
(72) Erfinder: ZUMKELLER, Andreas, 78647 Trossingen (DE)
(74) Vertreter: Kuhnen & Wacker Patent- und Rechtsanwaltsbüro PartG mbB
(86) Internationale Anmeldenummer: PCT/EP2017/072781
(87) Internationale Veröffentlichungsnummer: WO 2018/082833

(56) Entgegenhaltungen:
- JP-A- H05 285 779
- JP-A- 2006 015 422

## Beschreibung

### Gebiet der Erfindung

Die Erfindung betrifft ein System nach Anspruch 1, eine Auffangvorrichtung zur Verwendung in diesem System nach Anspruch 10 sowie ein entsprechendes Auffangverfahren nach Anspruch 12.

Heutzutage verwendete Werkzeugmaschinen bestehen in der Regel aus modularen Baugruppen wie beispielsweise dem Antrieb, der Steuerung, Führungen, die das Werkzeug auf bestimmten Bewegungsbahnen führen, sowie Messsystemen und dienen der - zumeist automatisierten - Fertigung von Werkstücken in einer vorgegebenen Form anhand einer definierten relativen Bewegung zwischen Werkstück und Werkzeug.

Dabei unterliegt die Fertigung von Werkstücken stetig wachsenden Anforderungen im Hinblick auf die Qualität der Werkstücke, den Fertigungspreis, die zeitliche Optimierung des Fertigungsprozesses sowie die Rohstoffoptimierung. Ein möglicher Weg, diesen steigenden Anforderungen gerecht zu werden, ist die Minimierung der Ausschussrate.

Obgleich moderne Werkzeugmaschinen in immer kürzer werdenden Bearbeitungsschritten Werkstücke fertigen können, bleibt die Schwachstelle vieler Fertigungsprozesse der Ausstoß der gefertigten Werkstücke.

Soll eine hohe Oberflächenqualität des Werkstücks erhalten bleiben, werden daher häufig Roboter verwendet, welche das Werkstück nach der Bearbeitung direkt aus der Werkzeugmaschine entnehmen und in eine nachgelagerte Anlage übergeben. Dieser zumeist getaktete Prozess nimmt allerdings viel Zeit in Anspruch und lässt daher keine hohen Fertigungsgeschwindigkeiten zu. Überdies ist der Einsatz derartiger Entnahmeroboter mit einem erhöhten Kostenaufwand für den Roboter sowie dessen Steuerung und Wartung verbunden.

Um die Fertigungsgeschwindigkeit wie gewünscht zu erhöhen, kann auch ein Ausstoßer oder ähnliches verwendet werden, welcher das Werkstück nach der Fertigung aus der Werkstückhalterung ausstößt. Das Werkstück fällt anschließend, in seiner Lage unbestimmt, in einen Sammelbehälter, der dann, wenn eine bestimmte Anzahl an Werkstücken darin gesammelt wurde, zur nächsten Bearbeitungsposition transportiert wird. Bei hochintegrierten Fertigungseinrichtungen kann das Werkstück auch aus der Werkzeugmaschine auf eine in der Bearbeitungsstrecke unter dem Werkstückauswurf angeordnete Rinne oder auf ein Fließband ausgestoßen und von dort zumindest teilweise automatisiert an nachgelagerte Anlagen übergeben werden.

### Stand der Technik

Der Stand der Technik offenbart hierzu beispielsweise in der EP 1 518 639 A2 eine Vorrichtung zum Abführen von Fertigungssteilen aus einem Prozessraum. Hierbei wird ein Aufnahmebehälter in dem Prozessraum positioniert, um eines oder mehrere Fertigungsteile zu entnehmen. Nach der Aufnahme des Fertigungsteils oder der Fertigungsteile wird der Aufnahmebehälter wieder aus dem Prozessraum geführt und das oder die Fertigungsteile von dem Aufnahmebehälter an eine Abtransporteinheit übergeben.

Bei der in der EP 1 518 639 A2 offenbarten Vorrichtung fallen die Fertigungsteile von der Werkstückaufnahmevorrichtung der Werkzeugmaschine in den Aufnahmebehälter. Dort treffen die Fertigungsteile ungebremst auf den Aufnahmebehälter oder auf bereits in dem Aufnahmebehälter befindliche Fertigungsteile, wodurch es zu Schlagstellen und dergleichen an den Fertigungsteilen kommen kann. Zudem ist durch das Einfahren und Ausfahren des Aufnahmebehälters in den Prozessraum sowie das Betätigen einer Klappe, welche den Aufnahmebehälter vor Öl, Spänen, etc. schützen soll, kein kontinuierliches Entnehmen der Fertigungsteile möglich, wodurch sich Verzögerungen im Fertigungsprozess ergeben können.

Die EP 0 282 717 A1 offenbart ein Verfahren sowie eine Einrichtung zum Überwachen einer programmgesteuerten Werkzeugmaschine. Hierbei ist zum Auffangen des nach der Bearbeitung von der Spannvorrichtung freigegebenen Werkstücks und für dessen Abtransport aus dem Arbeitsraum eine Auffangvorrichtung vorgesehen. Um das Auffangen des Werkstücks zu erfassen, wird ein Signal zur Maschinensteuerung ausgegeben. Dieses Signal wird dabei von einer Erschütterung abgeleitet, die das Werkstück nach einer Bewegung auf einer freien Flugbahn beim Aufprall auf die Auffangvorrichtung erzeugt.

Zwar ist in der in der EP 0 282 717 A1 beschriebenen Einrichtung ein aufpralldämpfendes Material zur Auskleidung der Seitenwände der Auffangvorrichtung vorgesehen, jedoch kann der Aufprall nur bis zu einem gewissen Grad gedämpft werden, da das an die Maschinensteuerung ausgegebene Signal von dem Aufprall des Werkstücks abhängt.

Dieses aufpralldämpfende Material kann somit nur einen Teil der Bewegungsenergie des aus der Werkzeugmaschine ausgestoßenen Werkstücks absorbieren, so dass es mitunter passieren kann, dass das Werkstück in der Auffangvorrichtung mehrfach vom Boden und den Seitenwänden abprallt, bevor es letztlich zum Liegen kommt, wodurch die Oberflächengüte aufgrund entstehender Schlagstellen vermindert werden kann. Wenn die Werkstücke schließlich ruhig in der Auffangvorrichtung liegen, werden einzelne Werkstücke über einen Schlauch weiter zu einem Behälter geleitet. Dort fällt das Werkstück am Ende des Schlauchs der Schwerkraft folgenden in den Behälter, wodurch es erneut zur Ausbildung von Abplatzungen und Schlagstellen am Werkstück kommen kann. Ein Ausgeben der Werkstücke bei hoher Oberflächengüte ist somit nicht erreichbar.

Zusammenfassend ist es bei den aus dem Stand der Technik bekannten Fertigungsprozessen somit nicht möglich, eine hohe Fertigungsgeschwindigkeit bei gleichzeitig hoher Qualität, insbesondere Oberflächengüte, der gefertigten Werkstücke zu erreichen.

Werden zur Sicherung der Werkstückqualität Roboter verwendet, ist aufgrund der begrenzten Geschwindigkeit der Roboter keine hohe Ausgabegeschwindigkeit für die Werkstücke möglich. Wenn dagegen die Werkstücke in dem Fertigungsprozess mit hoher Ausgabegeschwindigkeit ausgestoßen werden, kann die gewünschte, konstant hohe Oberflächengüte nicht erzielt werden, da die Werkstücke beim Aufprall in einem Sammelbehälter oder auf anderen Werkstücken zwangsweise Schlagstellen erfahren. Um hohen Qualitätsanforderungen an die gesamte Losgröße zu genügen, müssen zudem in aufwendigen nachgelagerten Kontrollschritten derartig mangelhafte Werkstücke erkannt und aussortiert werden, wodurch der Fertigungsprozess verlängert wird. In beiden Fällen ist die gewünschte Optimierung des Fertigungsprozesses, d.h. eine schnelle, kontinuierliche Entnahme der Werkstücke bei hoher Oberflächenqualität der Werkstücke, nicht möglich.

Ein gattungsgemäßes System für in einer Werkzeugmaschine bearbeitete Werkstücke ist zudem Gegenstand der JP H05-285779 A.

Ausgehend vom Stand der Technik liegt der Erfindung daher die Aufgabe zugrunde, eine Technologie anzubieten, mit der Werkstücke schlagstellenarm sowie zugleich kontinuierlich und schnell aus einer Werkzeugmaschine ausgegeben werden können.

### Kurzfassung der Erfindung

Diese Aufgabe wird durch ein System mit den Merkmalen des Anspruchs 1, eine Auffangvorrichtung zur Verwendung in diesem System mit den Merkmalen des Anspruchs 10 sowie ein entsprechendes Auffangverfahren mit den Merkmalen des Anspruchs 12 gelöst.

Das erfindungsgemäße System weist dabei auf: eine Werkzeugmaschine mit einer Werkstückauslassvorrichtung zum Auslassen von in der Werkzeugmaschine bearbeiteten Werkstücken sowie eine Auffangvorrichtung mit einer mit einem Fluid befüllbaren Aufnahmeeinrichtung zum Auffangen von aus der Werkzeugmaschine ausgeworfenen Werkstücken, einer mit dem Fluid befüllbaren Entnahmeeinrichtung zum Sammeln von Werkstücken, sowie einem mit dem Fluid befüllbaren, vorzugsweise rohrförmig ausgebildeten, Verbindungselement, wobei die Aufnahmeeinrichtung und die Entnahmeeinrichtung über das Verbindungselement miteinander verbunden sind, die Aufnahmeeinrichtung derart mit Fluid befüllbar ist, dass die aus der Werkzeugmaschine ausgeworfenen Werkstücke vollständig in das in der Aufnahmeeinrichtung enthaltene Fluid eintauchen, und die in der Aufnahmeeinrichtung aufgefangenen Werkstücke durch das zumindest teilweise mit Fluid befüllte Verbindungselement in die zumindest teilweise mit Fluid befüllte Entnahmeeinrichtung gelangen können. Mit anderen Worten sind die Aufnahmeeinrichtung und die Entnahmeeinrichtung derart über das Verbindungselement miteinander verbunden, dass aus der Werkzeugmaschine ausgeworfene Werkstücke ständig von Fluid umgeben sind und durch das Fluid gedämpft zu der Entnahmeeinrichtung gelangen können.

Bei dem erfindungsgemäßen System fallen die Werkstücke nach der Fertigung in der Werkzeugmaschine in einem freien Fall direkt in eine mit einem Fluid befüllbare Aufnahmeeinrichtung mit einem Auffangbehälter.

Da der Auffangbehälter derart mit dem Fluid gefüllt ist, dass die Werkstücke vollständig darin eintauchen, werden die Werkstücke in dem Auffangbehälter beim Eintauchen in das Fluid abgebremst und sinken vom Fluid umgeben langsam in Richtung des Bodens des Auffangbehälters, um schließlich sanft am Boden oder auf bereits aufgefangenen Werkstücken zum Liegen zu kommen. Durch das erfindungsgemäße System ist es somit möglich, Werkstücke schlagstellenfrei auszugeben und damit die Oberflächengüte der gefertigten Werkstücke konstant hoch zu halten. Da die Oberfläche der Werkstücke nicht beschädigt wird, kann somit auf umfangreiche nachgelagerte Kontrollschritte verzichtet werden.

Derartige Kontrollschritte wären andernfalls mit einer manuellen Kontrolle und damit einem erhöhten Personalbedarf oder weiteren Anlagen, beispielsweise messtechnischen Systemen, verbunden. Zudem birgt auch die nachgelagerte manuelle Kontrolle gefertigter Werkstücke ein gewisses Fehlerpotential. Dieses Fehlerpotential, bei welchem beschädigte Werkstücke nicht als Ausschuss erkannt werden, kann beseitigt oder zumindest verringert werden, indem durch die fluidgedämpfte Aufnahme der aus der Werkzeugmaschine ausgestoßenen Werkstücke in dem Auffangbehälter von vornherein höhere Qualitätsanforderungen erfüllt werden können. Obgleich die Qualität der Werkstücke natürlich nach wie vor stichpunktartig geprüft werden muss, um sicherzustellen, dass keine anderen Fehler während der Fertigung auftreten, ist der damit verbundene Aufwand deutlich geringer und weniger fehleranfällig, so dass letztlich der gesamte Fertigungsprozess optimiert werden kann.

Durch das Auffangen der an der Werkzeugmaschine bearbeiteten Werkstücke in dem Fluid kann der Aufprall des Werkstücks derart gedämpft werden, dass die im Fertigungsprozess erreichte Oberflächengüte vollständig erhalten bleibt. Da folglich die Ausschussrate aufgrund mangelhafter Oberflächengüte deutlich verringert werden kann, mithin gegen null geht, kann die Ausschussrate insgesamt stark verringert werden.

Um eine bestimmte Anzahl an Werkstücken zu erreichen, muss bei geringerem Ausschuss folglich weniger Rohstoff am Anfang des Prozesses bereit stehen. Aus dieser Rohstoffoptimierung resultieren nicht nur wirtschaftliche Vorteile, auch können Rohstoffe gespart und somit nachhaltiger produziert werden.

Da die Auffangvorrichtung die Werkstücke direkt, das heißt, ohne Zwischenschritte, in dem Fluid auffängt, kann zugleich ein kontinuierliches Ausgeben der Werkstücke aus der Werkzeugmaschine erreicht werden. Die Werkstücke werden automatisch, durch die Viskosität des Fluids gedämpft aufgrund ihres Eigengewichts der Schwerkraft folgend zur Unterseite des Auffangbehälters geleitet. Da keine weiteren Vorkehrungen, wie etwa Roboter, zur Entnahme der Werkstücke notwendig sind, ist das Ausgeben der Werkstücke unabhängig von Taktzeiten zusätzlicher Anlagen möglich, so dass hohe Fertigungsgeschwindigkeiten realisierbar sind.

Allein das Ende des Fertigungsprozesses bestimmt den Zeitpunkt der Ausgabe der Werkstücke. Da es zu keiner Wartezeit zwischen dem Ende des Fertigungsprozesses und dem Ausgeben der Werkstücke kommt, kann die gesamte Fertigungszeit des einzelnen Werkstücks erheblich verkürzt werden. Somit werden die Maschinenauslastung und damit die Rentabilität derselben gesteigert.

Durch eine Verkürzung der Fertigungszeit eines einzelnen Werkstücks aufgrund der hohen Ausgabegeschwindigkeit zusammen mit der Vermeidung von Ausschüssen kann die Fertigungszeit einer Losgröße gesenkt werden. Insgesamt ist somit eine geringere Anzahl an Werkzeugmaschinen notwendig, um die gleiche Anzahl an Werkstücken zu fertigen. Bei gleichbleibender Anzahl an Werkzeugmaschinen kann dagegen die Anzahl gefertigter Werkstücke pro Zeiteinheit erhöht werden, wodurch auch großvolumige Aufträge in kürzeren Zeiten ausgeführt werden können.

Das erfindungsgemäße System schafft durch die hohe Ausgabegeschwindigkeit und die Vermeidung von Ausschuss nicht nur zeitliche Einsparungen, auch können durch Rohstoffoptimierung, eine erhöhte Anlagenauslastung sowie die Vermeidung nachgelagerter Kontrollschritte finanzielle Vorteile erzielt werden.

Erfindungsgemäß ist ferner ein Tank für ein in der Werkzeugmaschine verwendetes Fluid vorgesehen, welches in der Werkzeugmaschine als Kühl-, Schmier- und/oder Bearbeitungsmittel, vorzugsweise als Schneidöl, verwendet wird, ein Leitungssystem für das in der Werkzeugmaschine verwendete Fluid und eine erste Pumpe zum Zirkulieren des Fluids in dem Leitungssystem aufweisen.

Durch das Vorsehen eines Fluidkreislaufs in der Werkzeugmaschine kann das Kühl-, Schmier- und/oder Bearbeitungsmittel nach der Verwendung wieder zurück zu dem Tank der Werkzeugmaschine gefördert werden. Die Werkzeugmaschine ist damit weitgehend unabhängig von äußeren Auffüllvorgängen. Durch eine derartig ausgestaltete Werkzeugmaschine können Werkstücke mit hoher Geschwindigkeit gefertigt werden, da nur sehr wenige bis gar keine Unterbrechungen zum Nachfüllen des Fluids notwendig sind.

Die Aufnahmeeinrichtung ist zumindest teilweise unter der Werkstückauslassvorrichtung der Werkzeugmaschine anordenbar und weist einen Auffangbehälter zum Auffangen von aus der Werkstückauslassvorrichtung ausgeworfenen Werkstücken mit einer Auffangöffnung, welche horizontal nach oben zu der Werkstückauslassvorrichtung geöffnet ist, auf, wobei der Auffangbehälter aus dem Tank der Werkzeugmaschine über ein Einfüllrohr mit dem Fluid befüllbar ist, so dass Werkstücke, welche von der Werkstückauslassvorrichtung ausgeworfen werden, vollständig in das in dem Auffangbehälter enthaltene Fluid eintauchen.

Da der Auffangbehälter direkt unter der Werkstückauslassvorrichtung in dem Arbeitsraum der Werkzeugmaschine während der Fertigung der Werkstücke platzierbar ist, fallen die durch das aus dem Stand der Technik bekannte Ein- und Ausfahren der Aufnahmeeinrichtung entstehenden Wartezeiten weg. Der Auffangbehälter ist dabei vorzugsweise trichterförmig ausgestaltet und weißt eine relativ große, horizontal nach oben geöffnete Auffangöffnung auf.

In der horizontal nach oben geöffneten Auffangöffnung können Werkstücke verschiedener Größen aufgenommen werden. Ein Umrüsten der Aufnahmeeinrichtung in Abhängigkeit der Abmessungen des Werkstücks ist somit unnötig, da Werkstücke unterschiedlichster Größe in den "Auffangtrichter" fallen und dort durch das Fluid gedämpft weitergeführt werden können. Da weder ein Umrüsten der Auffangvorrichtung noch ein Ausfahren derselben während des Fertigungsprozesses aus dem Arbeitsraum nötig ist, wird ein kontinuierliches Ausgeben ermöglicht.

Ferner ist durch das direkte Platzieren des Aufnahmebehälters unter der Werkstückauslassvorrichtung kein weiterer Übergabemechanismus zwischen der Werkstückauslassvorrichtung und dem Auffangbehälter notwendig. Die Werkstücke gelangen nach der Fertigung von selbst, d.h., aufgrund der auf sie wirkenden Schwerkraft, direkt in den Auffangbehälter.

Das Ausgeben der Werkstücke von der Werkzeugmaschine ist durch den Moment gekennzeichnet, in welchem die Werkstücke nicht mehr von Einrichtungen der Werkzeugmaschine gehalten werden. Diese Konfiguration ermöglicht daher ein kontinuierliches, schnelles sowie einfaches Ausgeben der Werkstücke.

Weiter hat die Aufnahmeeinrichtung zumindest eine in dem Verbindungselement angeordnete Sperre und einen Verschluss, welcher stromaufwärts der zumindest einen Sperre angeordnet ist, um die in dem Auffangbehälter vorgesehen Öffnung zu verschließen, wobei die zumindest eine Sperre und der Verschluss abwechselnd in einen geöffneten und geschlossenen Zustand bringbar sein können, so dass die Werkstücke und das Fluid durch den geschlossenen Zustand in der Aufnahmeeinrichtung gehalten werden und durch den geöffneten Zustand von der Aufnahmeeinrichtung in die Entnahmeeinrichtung gelangen können.

Durch ein derartiges Ausbilden einer Sperre und eines Verschlusses können mögliche Nachteile, welche sich aus einem kontinuierlichen Ausgabeprozess ergeben, verhindert werden. Der Verschluss ist stromaufwärts der Sperre angeordnet. Damit gelangen die Werkstücke nach dem Ausgeben aus der Werkzeugmaschine durch das Fluid in ihrer Bewegung gebremst zuerst zu dem Verschluss. Durch den Verschluss kann nun ein Weiterleiten der Werkstücke in der Aufnahmeeinrichtung kontrolliert gesteuert werden.

Hierdurch wird die Kontrolle der Ausgabe der Werkstücke von dem Bearbeitungsprozess in der Werkzeugmaschine entkoppelt. Damit unterliegt die Taktung des Bearbeitungsprozesses keinen Einschränkungen durch die nachgelagerte Weitergabe der Werkstücke, wobei zeitgleich durch den Verschluss der Vorteil einer gesteuerten und damit kontrollierten Weitergabe erreicht werden kann. Durch den Verschluss wird die Bewegung der Werkstücke in der Aufnahmeeinrichtung gestoppt. Durch dieses Stoppen kann die zeitliche Taktung der Ausgabe der Werkstücke bestimmt werden. Die zeitliche Steuerung der Ausgabe ist von der Ausgabe der Werkstücke von der Werkzeugmaschine getrennt. Somit kann die Ausgabe der Werkstücke zeitliche getaktet werden ohne den Fertigungsprozess der Werkzeugmaschine zu beeinflussen.

Überdies ermöglicht das Aufhalten der im Verbindungselement befindlichen Werkstücke an der Sperre ein Aufreihen und Ausrichten der Werkstücke vor der Übergabe in die Entnahmeeinrichtung.

Bei einer vorteilhaften Weiterbildung kann das Verbindungselement zur Außenseite der Werkzeugmaschine ragen und zum Leiten der Werkstücke aus dem Auffangbehälter zu der Entnahmeeinrichtung nach unten geneigt sein, und das Verbindungselement kann an seinem zu dem Auffangbehälter weisenden Ende mit dem Auffangbehälter, vorzugsweise einstückig, verbunden sein, so dass in dem Auffangbehälter befindliche Werkstücke durch eine in dem Auffangbehälter vorgesehene Öffnung in das Verbindungselement gelangen können.

Durch eine derart ausgebildete Auffangvorrichtung können die Werkstücke nicht nur schlagstellenfrei nach der Fertigung aufgefangen werden. Durch ein derartiges Verbindungselement zwischen Außenseite und Arbeitsraum kann auch sichergestellt werden, dass die Werkstücke schlagstellenfrei aus dem Arbeitsraum entnommen werden können. Die Werkstücke werden durch das Fluid über das Verbindungselement aus dem Arbeitsraum geleitet, ohne dass es zu Übergabesituationen kommen würde, durch welche die Werkstücke Schlagstellen erfahren können.

Durch ein einstückiges Ausbilden des Verbindungselements mit dem Auffangbehälter können die beiden Elemente zudem leicht gefertigt werden. Ferner wird hierdurch eine entsprechende Stabilität der Verbindung sichergestellt, da keine Schnittstellen, bzw. Verbindungen vorhanden sind, welche brechen oder sich lösen können. Durch eine derartige Konfiguration werden somit eine einfache Herstellung der Aufnahmeeinrichtung sowie eine sichere Gestaltung derselben ermöglicht.

Bei einer vorteilhaften Weiterbildung kann der Verschluss derart konfiguriert sein, dass er durch einen Zähler der Werkzeugmaschine gesteuert öffnet und schließt, und die zumindest eine Sperre kann derart konfiguriert sein, dass sie abhängig von dem Verschluss öffnet und schließt, wobei das Öffnen und Schließen des Verschlusses und der zumindest einen Sperre derart aufeinander abstimmbar sind, dass sich die zumindest eine Sperre in Abhängigkeit vom Öffnen und Schließen des Verschlusses öffnet und schließt, zur insbesondere taktweisen Förderung der aus der Werkzeugmaschine in die Aufnahmeeinrichtung ausgestoßenen Werkstücke durch das Verbindungselement in die Entnahmeeinrichtung.

Ein Steuern des Verschlusses durch einen Zähler der Werkzeugmaschine ermöglicht ein Überwachen der Anzahl an in dem Auffangbehälter befindlichen Werkstücken. Somit kann verhindert werden, dass der Auffangbehälter überfüllt wird. Eine zu große Anzahl an Werkstücken könnte zu einem Überlaufen des Fluids aus dem Auffangbehälter führen. Eine zu große Anzahl an Werkstücken könnte aber auch dazu führen, dass Werkstücke nicht zuerst in Fluid fallen und von diesem in ihrer Geschwindigkeit abgebremst werden, bevor sie auf bereits in dem Auffangbehälter vorhandene Werkstücke fallen, und somit Schlagstellen bekommen.

Die Sperre ist dem Verschluss in der Aufnahmeeinrichtung stromabwärts nachgelagert. Diese dient unter anderem dazu, die durch den Verschluss weitergeleiteten Werkstücke in dem Verbindungselement aufzureihen. Durch dieses Aufreihen können die Werkstücke nach einem Öffnen der Sperre weiter schlagstellenfrei geführt werden. Der Verschluss und die Sperre können derart aufeinander getaktet abgestimmt sein, dass der Verschluss nicht zeitgleich mit der Sperre geöffnet ist. Somit kann verhindert werden, dass das gesamte Fluid aus dem Auffangbehälter ausströmt.

Vielmehr gelangt genau derart viel Fluid von dem Auffangbehälter in das Verbindungselement, wie es der Abstand zwischen Verschluss und Sperre, sowie des Volumens des Verbindungselements zulassen. Durch diese Sperre muss somit nicht das gesamte Verbindungselement ständig mit Fluid gefüllt sein, um Werkstücke kontinuierliche von Fluid umgeben auszugeben.

Je nach Länge des Verbindungselementes können zudem mehrere Sperren in dem Verbindungselement angeordnet sein. Damit kann die erreichte Maximalgeschwindigkeit der Werkstücke in dem Verbindungselement begrenzt werden, wodurch auch hier sichergestellt wird, dass Werkstücke nicht unkontrolliert gegeneinander oder gegen die Innenwand des Verbindungselements schlagen. Eine erhöhte Anzahl an Sperren in dem Verbindungselement erhöht damit die Steuerbarkeit der Bewegung der Werkstücke.

Ferner kann die Entnahmeeinrichtung einen Sammelbehälter zum Sammeln von Werkstücken aufweisen, welche aus einer in dem stromabwärtigen Ende des Verbindungselements ausgebildeten Auslassöffnung in den Sammelbehälter fallen, wobei der Sammelbehälter zumindest teilweise für das Fluid durchlässig ausgestaltet sein kann.

Ein Anordnen des Sammelbehälters unterhalb der Auslassöffnung des Verbindungselements erlaubt es, die Werkstücke direkt nach Verlassen des Verbindungselements zu sammeln. Mit einer derart konfigurierten Anordnung kann eine bestimmte Anzahl an Werkstücken in dem Sammelbehälter aufgenommen und als Gesamtes zu einem nachgelagerten Prozessschritt übergeben werden. Das Sammeln reduziert und vereinfacht somit nachgelagerte Übergabeschritte und Schnittstellen. Zusammen mit den Werkstücken gelangt auch Fluid in den Sammelbehälter, um die Werkstücke auch an der Schnittstelle zwischen Verbindungselement und Sammelbehälter gedämpft zu leiten.

Durch eine für das Fluid durchlässige Konfiguration des Sammelbehälters können die Werkstücke schlagstellenfrei von dem Verbindungselement zu der nachgelagerten Entnahmeeinrichtung ausgegeben werden. Ähnlich zu dem Auffangbehälter ist der Sammelbehälter derart mit Fluid gefüllt, dass die Werkstücke durch die Viskosität des Fluids abgebremst werden, so dass sie weder durch ein Auftreffen auf dem Boden des Sammelbehälters noch auf anderen Werkstücken Schlagstellen erfahren. Vielmehr sinken die Werkstücke nur durch ihr Eigengewicht langsam auf den Boden, bzw. auf weitere Werkstücke. Durch ein derart weitergestaltetes System kann eine hohe Oberflächengüte während der gesamten Ausgabe der Werkstücke aufrechterhalten werden.

Bei einer vorteilhaften Weiterbildung der Erfindung kann/können die Entnahmeeinrichtung und/oder der darin aufgenommene Sammelbehälter, vorzugsweise über einen, insbesondere automatisch betätigten, Hebemechanismus, höhenverstellbar sein, so dass ein Abstand zwischen der Auslassöffnung und den in dem Sammelbehälter gesammelten Werkstücken in Abhängigkeit von der Anzahl der im Sammelbehälter gesammelten Werkstücke, vorzugsweise automatisch, veränderbar ist.

Durch eine Anpassbarkeit des Abstands, der durch die Fallhöhe der Werkstücke von der Auslassöffnung des Verbindungselements zum Boden des Sammelbehälters bzw. den in dem Sammelbehälter bereits gesammelten Werkstücken definiert ist, kann auch in diesem Schritt vermieden werden, dass Werkstücke aufeinander auftreffen, ohne vorher durch das Fluid ausreichend in ihrer Fallgeschwindigkeit abgebremst worden zu sein. Wird der Abstand in Abhängigkeit von der Anzahl der bereits vorhandenen Werkstücke gesteuert, und nicht etwa in Abhängigkeit einer bestimmten Zeit, kann der Füllstand von Werkstücken im Auffangbehälter und damit der Abstand genau überwacht werden.

Um den Abstand zwischen der Auslassöffnung und den in dem Sammelbehälter gesammelten Werkstücken zu verändern, ist es ausreichend, dass entweder die Entnahmeeinrichtung oder der darin aufgenommene Sammelbehälter höhenverstellbar ist. Sind jedoch beide höhenverstellbar, so kann der Bereich eines möglichen einstellbaren Abstands erhöht werden, da beide Verstellbereiche aufaddiert werden können.

Somit ist es auch möglich, ein Verstellen des Abstands in Abhängigkeit räumlicher Begebenheiten einer bestimmten Werkzeugmaschine verändern zu können. Häufig weisen Werkzeugmaschinen höhenverstellbare Bearbeitungstische auf. Mit der räumlichen Veränderung der Werkzeugmaschine ist mit der erfindungsgemäßen Ausgestaltung auch die Auffangvorrichtung mit anpassbar.

Ferner kann das erfindungsgemäße System eine Füllstandteuerung aufweisen, welche konfiguriert ist, um einen Füllstand des Fluids in dem Auffangbehälter derart zu steuern, dass der Füllstand innerhalb eines ersten vordefinierten Bereichs liegt, und/oder, um einen Füllstand des Fluids in der Entnahmeeinrichtung derart zu steuern, dass der Füllstand innerhalb eines zweiten vordefinierten Bereichs liegt.

Durch eine Füllstandteuerung für den Füllstand in dem Auffangbehälter und/oder in der Entnahmeeinrichtung kann der Füllstand des Fluids unabhängig von der Anzahl der Werkstücke gesteuert werden. Beispielsweise können Verschluss und Sperre derart angesteuert werden, dass das Fluid unabhängig von den Werkstücken von dem Auffangbehälter zu der Entnahmeeinrichtung gelangen kann.

Durch ein Steuern der Füllstände unabhängig von der Anzahl oder dem Vorhandensein von Werkstücken kann etwa ein geeigneter Füllstand schon beim Hochfahren der Werkzeugmaschine erreicht werden. Somit können die Werkstücke von Anfang an, das heißt, die aus einem Los zuerst gefertigten Werkstücke, bereits durch das Fluid gedämpft und damit schlagstellenfrei Ausgegeben werden.

Durch eine von den Werkstücken unabhängige Steuerung der Füllstände kann die Ausschussrate aufgrund von Schlagstellen an den Werkstücken weiter reduziert werden. Die vordefinierten Bereiche können zudem adaptive Bereiche sein, und sich in Abhängigkeit von beispielsweise Werkstückabmessungen, Anzahl ausgegebener Werkstücke und ähnlichen verändern. So ist es beispielsweise möglich den Abstand zwischen Fluidoberfläche und Boden, beziehungsweise bereits gesammelten Werkstücken, konstant zu halten. Mit anderen Worten wird für jedes ausgegebene Werkstück der gleiche Weg im Fluid gewährleistet.

Weiter kann das System eine zweite Pumpe aufweisen, welche derart konfiguriert ist, um das Fluid, vorzugsweise durch die Füllstandsteuerung gesteuert, aus der Entnahmeeinrichtung über ein Rücklaufrohr, vorzugsweise durch ein in dem Rücklaufrohr angeordnetes Filterelement, zurück in das Leitungssystem der Werkzeugmaschine zu fördern.

Durch die zweite Pumpe kann das Fluid, welches in der Werkzeugmaschine verwendet wird, und zum Dämpfen der Werkstücke mit diesen durch das System geleitet wird, schließlich wieder zurück gefördert werden. Durch diese zweite Pumpe bildet sich zusätzlich zu dem Fluidsystem der Werkzeugmaschine ein weiteres Fluidsystem aus. Durch die zweite Pumpe wird aus den beiden Fluidsystemen ein gemeinsamer Fluidkreislauf. Ein Teil des Fluids gelangt zu Beginn aus dem Leitungssystem der Werkzeugmaschine in den Auffangbehälter und wird schließlich aus der Entnahmeeinrichtung wieder durch die zweite Pumpe zurück zu dem Leitungssystem der Werkzeugmaschine gefördert.

Durch diesen Kreislauf erlangt das Fluidsystem von Werkzeugmaschine und System eine weitgehende Unabhängigkeit von äußeren Systemen. Durch ein Filterelement in dem zweiten Fluidkreislauf können Späne und andere Fremdstoffe aus dem Fluid entfernt werden, wodurch sich die Unabhängigkeit des Fluidkreislaufs auf nur wenige nötige Wartungsprozesse weiter erhöhen kann.

Bei einer vorteilhaften Weiterbildung kann die Entnahmeeinrichtung als ein horizontal nach oben geöffnetes Behältnis ausgebildet sein, das derart auf einem, vorzugsweise fahrbaren, Ständer gelagert ist, dass der Auffangbehälter der Aufnahmeeinrichtung der Auffangvorrichtung unter der Werkstückauslassvorrichtung der Werkzeugmaschine positionierbar ist, eine erste Sammelbehälterhalterung in dem Behältnis angeordnet ist, in welcher der Sammelbehälter derart gehalten ist, dass dieser zumindest teilweise von dem Fluid durchsetzt ist, und eine zweite, von der ersten Sammelbehälterhalterung separat ausgebildete, Sammelbehälterhalterung an einem höher gelegenen Bereich des Behältnisses als die erste Sammelbehälterhalterung angeordnet ist.

In dieser zweiten, von der ersten Sammelbehälterhalterung separat ausgebildeten Sammelbehälterhalterung ist der Sammelbehälter derart abstellbar, dass Fluid zurück in das Behältnis strömen kann. Mit anderen Worten wird der Sammelbehälter in der ersten Sammelbehälterhalterung von Fluid durchströmt, während das Fluid in der zweiten Sammelbehälterhalterung aus dem Sammelbehälter hinausströmt.

Durch ein Ausbilden eines gegenüber dem Fluid durchlässigen Sammelbehälters ist es auf besonders einfach Weise möglich, Werkstücke vor Verlassen des Systems weitgehend von dem Fluid zu trennen. Damit kann das Fluid größtenteils rückgewonnen werden. Nachdem der Sammelbehälter in die zweite Sammelbehälterhalterung übergeben worden ist, sind die Werkstücke nicht mehr von dem Fluid umgeben. Somit tropft das Fluid von den Werkstücken zurück in die Entnahmeeinrichtung. Die Werkstücke verbleiben, nachdem sie aus dem Verbindungselement ausgegeben wurden, in dem Sammelbehälter.

Nur der Sammelbehälter wird von der ersten zur zweiten Sammelbehälterhalterung übergeben. Somit ist auch hier sichergestellt, dass die Werkstücke durch das Verbleiben im Sammelbehälter, d.h., dem Vermeiden weiterer Wege, keine Schlagstellen bekommen. Ein Ausbilden der Entnahmeeinrichtung als fahrbares Behältnis ermöglicht ein einfaches Integrieren des Systems an bestehenden Werkzeugmaschinen.

Weiter kann das Fluid, mit welchem die Auffangvorrichtung zumindest teilweise befüllbar ist, das in der Werkzeugmaschine genutzt Fluid sein.

Durch Verwenden des in der Werkzeugmaschine genutzten Fluids, beispielsweise des Schneidöls, als Fluid im System zum Auffangen, Dämpfen und somit schlagstellenfreien Ausgeben der Werkstücke über die Auffangvorrichtung aus dem Arbeitsraum, ist es möglich, die Gesamtkonstruktion einfach zu halten, da keine zwei Kreisläufe für unterschiedliche Fluide benötigt werden, die in der Werkzeugmaschine sowie der Auffangvorrichtung verwendet werden.

Hierdurch müssen auch keine Abscheide- und/oder Trennmechanismen vorgesehen werden, die das Arbeitsfluid der Werkzeugmaschine vom Arbeitsfluid in der Auffangvorrichtung trennen. Der Verzicht auf derlei zusätzliche Vorrichtungen verhindert nicht nur einen Anstieg der Systemkosten sondern erlaubt das kontinuierliche Ausgeben der Werkstücke auf besonders einfache Weise, da der Auffangbehälter offen unter der Werkzeugmaschine im Arbeitsraum platziert werden kann.

Bei der Verwendung von zwei oder mehr Fluidkreisläufen müssten hingegen, wie vorstehend angeführt, Trennmechanismen für beide Systeme vorgesehen werden oder die Aufnahmevorrichtung müsste, wie im Stand der Technik, während dem Bearbeiten des Werkstücks aus dem Arbeitsraum herausgefahren werden. Hierdurch würden Wartezeiten entstehen und ein kontinuierliches Ausgeben wäre nicht mehr möglich.

Ein weiterer Aspekt der Erfindung stellt gemäß Anspruch 10 eine Auffangvorrichtung dar. Diese Auffangvorrichtung kann bei bereits bestehenden Werkzeugmaschinen integriert werden. Damit ist es mit der Auffangvorrichtung möglich, die oben beschriebenen vorteilhaften Effekte zu erreichen. Eine derartige erfindungsgemäße Auffangvorrichtung stellt dabei ein selbstständig handelbares Gut dar.

Zudem kann ein Auffangverfahren nach Anspruch 12 für in einer Werkzeugmaschine bearbeitete Werkstücke unter Verwendung einer derartigen Auffangvorrichtung in dem oben beschriebenen System durchgeführt werden. Auch mit diesem Auffangverfahren können die oben beschriebenen vorteilhaften Effekte der Erfindung erreicht werden.

Zudem ist es mit einem derartig ausgebildeten Verfahren möglich, Werkstücke nicht nur aus einer ersten Werkzeugmaschine schlagstellenfrei und mit einer hohen Ausgabegeschwindigkeit auszuwerfen, sondern diese zugleich schlagstellenfrei zu einer nachgelagerten Bearbeitungseinrichtung weiter zu fördern.

### Kurze Beschreibung der Zeichnungen

Die Merkmale und Vorteile sowie die technische und wirtschaftliche Bedeutung einer beispielhaften Ausführungsform der vorliegenden Erfindung wird nachfolgend Bezug nehmend auf die beigefügte Zeichnung beschrieben; hierbei zeigt:
- Fig. 1: eine Ansicht, welche eine schematische Konfiguration eines Systems darstellt; und
- Fig. 2: eine Ansicht, welche eine schematische Anordnung einer Auffangvorrichtung an einer Werkzeugmaschine darstellt.

### Detaillierte Beschreibung der Ausführungsformen

Nachfolgend wird eine Ausführungsform der Erfindung im Detail mit Bezug auf die beigefügten Zeichnungen beschrieben.

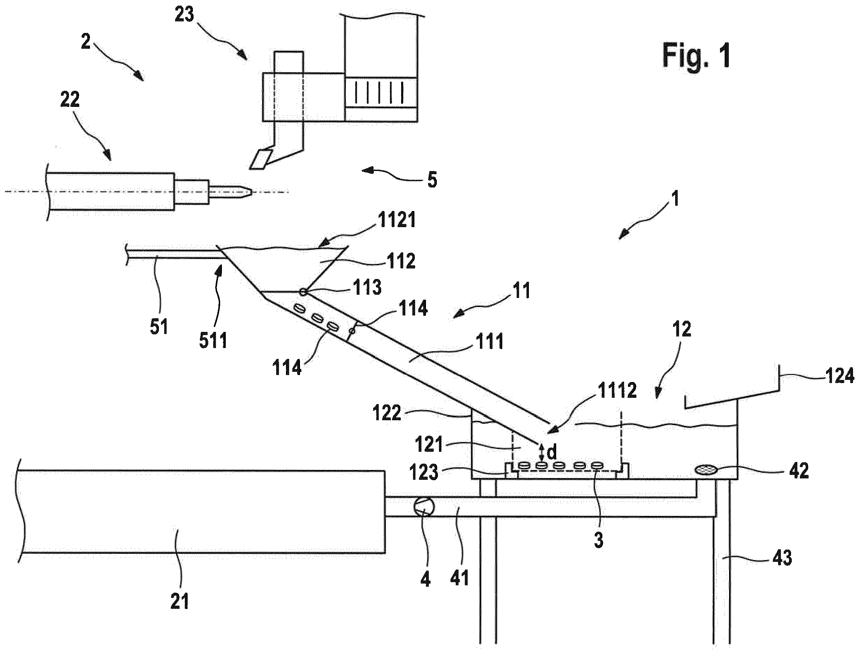

Dabei zeigt Fig. 1 eine schematische Konfiguration eines Systems gemäß einer Ausführungsform der Erfindung. Das System weist eine Werkzeugmaschine 2 sowie eine Auffangvorrichtung 1 auf, wobei die Auffangvorrichtung 1 eine Aufnahmeeinrichtung 11 und eine Entnahmeeinrichtung 12 enthält.

Die Werkzeugmaschine 2 ist in der in Fig. 1 dargestellten Ausführungsform als Drehzentrum ausgebildet. Die als Drehzentrum ausgebildete Werkzeugmaschine 2 weist eine Hauptspindel 22 mit einer als Futter ausgebildeten Werkstückaufnahme auf. Die in Fig. 1 dargestellte Hauptspindel 22 ist als waagrechte Hauptspindel 22 ausgebildet, ebenso kann aber auch eine senkrechte Hauptspindel verwendet werden. Das Werkzeug ist in einem Werkzeughalter 23 aufgenommen. Der Werkzeughalter 23 wird über verschiedene, nicht dargestellte Schlitten, translatorisch bewegt.

Die Werkzeugmaschine 2 ist als Zentrum mit automatisiertem Werkzeugwechsel ausgebildet und besitzt eine Steuerung, beispielsweise eine numerische Steuerung. Die Steuerung kann verschiedene Maschinenfunktionen überwachen und steuert sowie kontrolliert unter anderem die Positionierung des Werkzeugs relativ zu einem gerade bearbeiteten Werkstück 3. Bei der hier dargestellten Ausführungsform bearbeitet die als Drehzentrum ausgebildete Werkzeugmaschine 2 Drehteile 3.

Die Werkzeugmaschine 2 kann anstelle eines Drehzentrums ebenso als Fräsmaschine, oder eine andere Werkzeugmaschine zur spanabhebenden Bearbeitung mit geometrisch bestimmter Schneide konfiguriert sein. Auch sind weitere Werkzeugmaschinen wie Pressmaschinen oder Ziehmaschinen verwendbar. Zudem kann die Werkzeugmaschine mehrere Spindeln aufweisen, welche sowohl das Werkstück als auch das Werkzeug aufnehmen können. Anstelle eines Bearbeitungszentrums kann die Werkzeugmaschine ebenso als NC-Maschine ohne automatisierten Werkzeugwechsel, als Zelle, das heißt, mit zusätzlichem automatisiertem Werkstückwechsel, sowie als System mit zusätzlicher automatischer Umstellung auf andere Werkstücke ausgebildet sein. Der Automatisierungsgrad der Werkzeugmaschine ist nicht beschränkt und die Werkzeugmaschine kann beispielsweise auch als Teil einer Fertigungsstraße ausgebildet sein.

Die Werkzeugmaschine 2 weist einen Körper mit einem Bett 21, zumindest einen Schlitten, zumindest eine Führung für den zumindest einen Schlitten, Tische, Antriebsbaugruppen, Bedienelemente sowie Baugruppen zur Ver- und Entsorgung für Schneidöle, Späne, Kühlmittel und dergleichen auf. Das Bett 21 ist in der dargestellten Werkzeugmaschine 2 als Flachbett 21 ausgebildet, kann aber auch in jeder anderen Bauform, wie beispielsweise als Schrägbett, Steilbett oder Frontbett, ausgebildet sein.

Zur Bearbeitung der Werkstücke 3 erzeugt ein Hauptantrieb ein Moment für die Hauptspindel bei einer vorbestimmten Drehzahl. In Abhängigkeit dieser Drehzahl wird ein Vorschub gesteuert, den ein Längsschlitten längs zur Werkstückachse ausführt. Zudem enthält die Werkzeugmaschine 2 einen Werkzeugrevolver zum automatischen Wechsel der Werkzeuge. Somit können mehrere Bearbeitungsschritte an einem Werkstück 3 ausgeführt werden, ohne dass ein manueller Eingriff, beispielsweise zum Wechsel der Werkzeuge erfolgen muss.

Um die Werkzeugmaschine 2 vor Umgebungseinflüssen, wie Schmutz und ähnlichem, und die Umgebung vor Bearbeitungsmedien, etwa Spritzern des Schneidöls oder herumfliegende Späne, zu schützen, ist die Werkzeugmaschine 2 mit ihren Hauptkomponenten in einem Gehäuse aufgenommen, das beispielsweise kameragestützt oder über ein Sichtfenster eine kontinuierliche Überwachung des Fertigungsprozesses erlaubt.

Während der Bearbeitung ist das Werkstück 3 in dem Futter der Hauptspindel 22 aufgenommen und dreht relativ zu dem Werkzeug, wobei das Werkzeug mit Hilfe des Schlittens eine translatorische Bewegung vollzieht, um dabei spanabhebend Material von dem Werkstück 3 abzutragen. In einer derartig ausgebildeten Werkzeugmaschine können sowohl komplexe Bauteile als auch einfache Werkstücke 3, wie Schüttgut, gefertigt werden.

Nach der Fertigung wird das Werkstück 3 aus der Werkzeugmaschine 2 in einen Auffangbehälter 112 ausgegeben. Hierfür ist der Auffangbehälter 112 innerhalb des Gehäuses der Werkzeugmaschine 2 unterhalb einer Werkstückauslassvorrichtung 5 der Werkzeugmaschine 2 angeordnet. Ist die Werkzeugmaschine 2 von einem Gehäuse umgeben, ragt ein Teil der Aufnahmeeinrichtung, genauer zumindest der Auffangbehälter 112 sowie ein Teil eines Verbindungselements 111, durch eine Öffnung des Gehäuses in den Arbeitsraum der Werkzeugmaschine 2 hinein.

Der Auffangbehälter 112 ist in dem Ausführungsbeispiel als Metalltrichter ausgebildet. Der Auffangbehälter 112 weist eine nach oben geöffnete, vorzugsweise runde oder ovale Auffangöffnung 1121 auf. Alternativ kann die Auffangöffnung 1121 auch viereckig oder polygonal ausgestaltet sein, so lange dadurch aus der Werkzeugmaschine 2 ausgestoßene Werkstücke 3 aufgenommen werden können. Insbesondere ist die Auffangöffnung 1121 derart ausgerichtet, dass sie den Bereich unterhalb der Werkstückauslassvorrichtung 5 abdeckt, so dass bearbeitete Werkstücke 3 nach der Fertigung allein aufgrund der Schwerkraft in die Auffangöffnung 1121 fallen können, ohne dass eine Führung oder dergleichen notwendig ist, mittels welcher die Werkstücke 3 in die Auffangöffnung 1121 gelangen können.

Wenn die Werkstücke 3 nach der Fertigung einen Impuls durch die Werkstückauslassvorrichtung 5 erfahren und so in einer bestimmten Richtung beschleunigt werden, kann die Auffangöffnung 1121 aber auch mit einem geringen Abstand beabstandet von der Werkstückauslassvorrichtung angeordnet sein. In diesem Fall ist die Auffangöffnung 1121 in der Flugbahn der Werkstücke 3 angeordnet. Die Auffangöffnung 1121 ist wesentlich größer als die auszugebenden Werkstücke 3 ausgebildet. Genauer kann der Durchmesser der Auffangöffnung 1121 zumindest die doppelte, bevorzugt zumindest die dreifache, besonders bevorzugt zumindest die vierfache Größe oder mehr der größten Längenabmessung bzw. des Durchmessers der Werkstücke 3 betragen.

Um die Werkstücke 3 nach der Fertigung aus dem Futter der Hauptspindel 22 auszugeben, ist die Werkstückauslassvorrichtung 5 in dem Ausführungsbeispiel als ein Ausstoßer ausgebildet. Der Ausstoßer versetzt das gerade bearbeitete Werkstück 3 in eine vorbestimmte Richtung in Bewegung, so dass das Werkstück 3 in Richtung der Auffangöffnung 1121 des Auffangbehälters 112 fällt und in dem Auffangbehälter 112 aufgefangen wird. Der Auffangbehälter 112 kann bewegbar ausgestaltet sein, so dass die Auffangöffnung 1121 in einem Bereich unterhalb der Werkstückauslassvorrichtung 5 verfahrbar ist und die Platzierung des Auffangbehälters 112 an verschiedene Werkstückauslassvorrichtungen 5 anpassbar ist.

Um in die Auffangöffnung 1121 zu gelangen, kann das Werkstück 3 alternativ auch ohne einen Ausstoßer, das heißt, direkt nach der Fertigung, in die Auffangöffnung 1121 fallen. Dies geschieht bei der dargestellten Werkzeugmaschine 2 beispielsweise dann, wenn mehrere Werkstücke 3 aus einem Rohling entstehen. In diesem Fall werden die Werkstücke 3 von dem großen Rohling durch einen Abstechmeißel "abgeschnitten" und fallen dann nach unten. In diesem Fall ist die Auffangöffnung 1121 vertikal unter der Hauptspindel 22 angeordnet.

Nach dem Ausgeben der Werkstücke 3 durch die Werkstückauslassvorrichtung 5 fallen diese durch die Auffangöffnung 1121 in den Auffangbehälter 112. Der Auffangbehälter 112 ist mit einem Fluid gefüllt, so dass das gerade ausgeworfene Werkstück 3 auf das Fluid auftrifft, von diesem in der Bewegung abgebremst wird und vollständig von dem Fluid umschlossen wird, mit anderen Worten: in das Fluid eintaucht. Das Werkstück 3 wird somit durch das Fluid gedämpft und in dem Auffangbehälter 112 aufgefangen, wodurch das Werkstück 3 keine Schlagstellen oder ähnliches erfährt.

In dieser Ausführungsform ist das den Auffangbehälter 112 zumindest teilweise füllende Fluid das Schneidöl der Werkzeugmaschine 2. Das Schneidöl wird zur Bearbeitung der Werkstücke 3 in der Werkzeugmaschine 2 verwendet, so dass es nicht nötig ist, einen zweiten Fluidkreislauf vorzusehen, in dem ein separates Fluid bevorratet ist, das in der Auffangvorrichtung 1 verwendet wird. Das Schneidöl ist dabei ein herkömmlich bekanntes Bearbeitungsmittel zur spanenden bzw. spanabhebenden Bearbeitung in Werkzeugmaschinen. Ein Beispiel für ein derartiges, bei Werkzeugmaschinen verwendetes Schneidöl ist opta HE 500^{®}, das bei 40°C eine Viskosität von ca. 50 mm²/s aufweist. Als Bearbeitungsmittel können wassermischbare sowie nicht wassermischbare Kühlschmierstoffe verwendet werden.

Als das Fluid können neben dem Schneidöl weitere in der Werkzeugmaschine 2 verwendbare Bearbeitungsmittel verwendet werden. Damit kann etwa auch ein Schmierstoff als Fluid in der Auffangvorrichtung 1 verwendet werden, das die beweglichen Elemente, wie etwa die Hauptspindel 22 schmiert. Alternativ kann aber auch ein direkt zur Bearbeitung der Werkstücke 3 verwendetes Fluid, etwa Wasser im Fall einer Wasserstrahlschneidmaschine, verwendet werden.

Die Dämpfung der aus der Werkzeugmaschine 2 ausgegebenen Werkstücke 3 ist dabei von der Viskosität des in dem Auffangbehälter 112 aufgenommenen Fluids, der Geometrie der Werkstücke 3 sowie dem Füllstand des Fluids in dem Auffangbehälter 112 abhängig. Dabei können die Parameter Viskosität und Füllstand an die jeweiligen Geometrien der Werkstücke 3 angepasst werden. Beispielsweise kann der Füllstand durch die Steuerung der Werkzeugmaschine 2 bei kompakten Werkstücken 3, das heißt bei Werkstücken 3 mit geringem Strömungswiderstand, höher eingestellt werden oder es kann ein Fluid mit höherer Viskosität verwendet werden.

Um das Risiko möglicher Schlagstellen der Werkstücke 2 auch bei einem fehlerhaften Betrieb der Werkzeugmaschine 2 zu minimieren, kann der Auffangbehälter 112 zudem einen elastischen, aufpralldämpfenden Randbereich aufweisen. Durch einen elastischen Randbereich kann verhindert werden, dass Werkstücke 3, welche beispielsweise durch eine Fehlsteuerung des Ausstoßers einen zu starken oder zu schwachen Impuls erfahren und nicht direkt, beispielsweise zentral, durch die Auffangöffnung 1121 in das Schneidöl fallen, am Rand des Auffangbehälters 112 anschlagen und somit Schlagstellen erfahren. Der Randbereich kann hierfür vorzugsweise aus einem weichen Kunststoff wie etwa Silikon, ausgestaltet oder damit überzogen sein.

Da das den Auffangbehälter 112 füllende Fluid in der Werkzeugmaschine 2 als Schneidöl verwendet wird, kann der Auffangbehälter 112 aus einem Tank, der in der Fig. 1 nicht dargestellt ist, der Werkzeugmaschine 2 befüllt werden. Hierfür ist in einem oberen Bereich des Auffangbehälters 112 eine Einfüllöffnung 511 vorgesehen. In diese Einfüllöffnung 511 führt ein Einfüllrohr 51, das in der Ausführungsform als Kunststoffschlauch ausgebildet ist, aber auch als Metallrohr oder Kunststoffrohr ausgebebildet sein kann. Das Einfüllrohr 51 ist hier beispielsweise über ein mit dem Auffangbehälter 112 verschweißtes Metallröhrchen aufgeschrumpft. Der Kunststoffschlauch kann aber auch durch eine Schelle oder ähnliches mit dem Auffangbehälter 112 verbunden sein. Ebenso kann das Einfüllrohr 51 auch aus Metall oder Kunststoff hergestellt sein und kann direkt mit dem Auffangbehälter 112 verschweißt, verklebt oder pressgepasst verbunden sein.

Alternativ kann das Einfüllrohr 51 oberhalb der Auffangöffnung 1121 des Auffangbehälters 112 enden, so dass das verwendete Fluid über die Auffangöffnung 1121 in den Auffangbehälter 112 einströmt, ohne dass dabei jedoch das Einfüllrohr 51 die Flugbahn der Werkstücke 3 behindert.

Um das Fluid aus dem Tank der Werkzeugmaschine 2 zu dem Auffangbehälter 112 zu fördern, kann eine Pumpe vorgesehen sein. Zusätzlich können in dem Einfüllrohr 51 zur Steuerung des Einfüllstroms aus dem Tank der Werkzeugmaschine Klappen, Blenden, Ventile oder ähnliches vorgesehen sein. Diese Steuermechanismen werden dann ebenfalls von der Steuerung der Werkzeugmaschine 2 geregelt.

Wie oben erwähnt, kann der Füllstand des Auffangbehälters 112 in Abhängigkeit vom Volumen und der Abmessung der bearbeitenden und auszugebenden Werkstücke 3 variieren. Um einen bestimmten Füllstand zu erreichen, kann ein erster Bereich des Füllstands in dem Auffangbehälter 112 durch verschiedenartige Sensoren überwacht werden. Beispielsweise kann der Füllstand mechanisch, etwa durch einen Schwimmer, kapazitiv oder über Ultraschall, beispielsweise mit Hilfe einer Laufzeitmessung erfasst werden. Die Sensoren geben ein Signal an die Steuerung der Werkzeugmaschine 2 aus, welche anschließend entsprechende Befehle an die Regelglieder, wie beispielsweise Klappen, Ventile oder Blenden ausgibt.

Um die Sicherheit des Ausgabeprozesses zu erhöhen, kann ein Unter- oder Überschreiten des vorbestimmten Füllstandbereichs zu einem Stoppen der Werkzeugmaschine 2 und somit zu einem Ausgabestopp der Werkstücke 3 führen. Dadurch kann vermieden werden, dass Werkstücke 3 in einen mit zu wenig Fluid gefüllten Auffangbehälter 112 fallen und Schlagstellen erfahren.

Das Fluid gelangt sowohl als Fluid der Werkzeugmaschine 2, welches während der Fertigung des Werkstücks 3 in der Werkzeugmaschine 2 verwendet wird und dabei in den Auffangbehälter 112 tropft und an den Werkstücken 3 haftet, sowie zusätzlich aus dem Tank der Werkzeugmaschine 2 durch das Einfüllrohr 51 in den Auffangbehälter 112. Damit muss der Auffangbehälter 112, genauer die Auffangöffnung 1121 des Auffangbehälters 112, nicht gegen das bei der Fertigung verwendete Fluid, wie etwa das Schneidöl, abgeschirmt werden.

Da das Fluid nicht nur über das Einfüllrohr 51 in den Auffangbehälter 112 gelangt, wird der Füllstand durch die oben beschriebenen Sensoren überwacht. Damit wird gewährleistet, dass das aus der Werkzeugmaschine 2 ausgeworfene Werkstück 3 in dem ausreichend mit Fluid gefüllten Auffangbehälter 112 aufgefangen wird. Wegen der bevorzugt hohen Viskosität des Fluids, beispielsweise des Schneidöls, wird das Werkstück 3 in seiner Bewegung abgebremst und sinkt somit langsam auf den Boden des Auffangbehälters 112.

Wenn das Werkstück 3 auf den Boden des Auffangbehälters 112 gesunken ist, gelangt es an einen Verschluss 113, welcher am Boden des Auffangbehälters 112 ausgebildet ist. Der Verschluss 113 ist bei der hier dargestellten Ausführungsform für das Fluid undurchlässig ausgestaltet und hält das Werkstück 3 sowie das Fluid im Auffangbehälter 112 zurück. Wenn der Verschluss 113 geöffnet wird, werden sowohl das Fluid als auch in dem Auffangbehälter 112 aufgenommene Werkstücke 3 in das Verbindungselement 111 weitergeleitet.

Der Verschluss 113 kann neben dem geöffneten und geschlossenen Zustand auch einen Zustand aufweisen, in welchem nur Fluid von dem Auffangbehälter 112 in das Verbindungselement 111 gelangt, Werkstücke 3 dagegen in dem Auffangbehälter 112 verbleiben. In dem hier dargestellten Ausführungsbeispiel ist der Verschluss 113 als eine Blende ausgebildet, so dass für das Öffnen und Schließen des Verschlusses 113 kein zusätzlicher Schwenkraum vorhanden sein muss. Alternativ kann der Verschluss 113 jedoch auch als eine Klappe oder ein Schieber ausgebildet sein.

Das Öffnen und Schließen der Blende wird beispielsweise durch einen Zähler der Werkzeugmaschine 2 gesteuert. Der Zähler überwacht und zählt dabei die Anzahl der ausgeworfenen Werkstücke 3 und überwacht somit, wie viele Werkstücke 3 sich in dem Auffangbehälter 112 befinden. Das Öffnen und Schließen des Verschlusses 113 wird in Abhängigkeit dieser Anzahl gesteuert. Nachdem der Zähler eine bestimmte Anzahl von Werkstücken 3 gezählt hat, öffnet der Verschluss 113 und lässt die Werkstücke 3 zusammen mit dem sich in dem Auffangbehälter 112 befindenden Fluid zu dem Verbindungselement 111 aus.

Da das Verbindungselement 111 durch eine Öffnung im Gehäuse aus dem Arbeitsraum der Werkzeugmaschine 2 ragt, werden die Werkstücke 3 durch das Verbindungselement 111 aus dem Arbeitsraum geleitet. Das Verbindungselement 111 ist hierfür ausgehend von dem mit dem Auffangbehälter 112 verbundenen Ende horizontal schräg nach unten geneigt. Damit gleiten die Werkstücke 3 durch die Schwerkraft von selbst in dem Verbindungselement 111. In dem in Fig. 1 dargestellten Ausführungsbeispiel ist das Verbindungselement 111 als Metallrohr 111 ausgebildet.

Der Auffangbehälter 112 kann mit dem Verbindungselement 111 einstückig verbunden sein. Die Verbindung kann beispielsweise durch Schweißen, wie Laserschweißen, Lichtbogenschweißen oder Plasmaschweißen, sowie Kleben oder Nieten erfolgen. Ebenso können der Auffangbehälter 112 und das Verbindungselement 111 auch aus zwei Teilen bestehen.

In diesem Fall kann das Verbindungselement 111 beispielsweise ein Außengewinde aufweisen und in den Auffangbehälter 112 eingeschraubt werden. Auch sind weitere Verbindungsarten wie Presspassungen möglich. Sind der Auffangbehälter 112 und das Verbindungselement 111 nicht einstückig ausgebildet, so sind zusätzliche Dichtelemente, beispielsweise eine Gummidichtung, vorgesehen.

Zudem kann der Auffangbehälter 112 alternativ zu dem Metalltrichter 112, beispielsweise als eine rechteckige Kunststoffwanne oder halbkugelförmige Aluminiumschüssel ausgebildet sein. Zudem können der Auffangbehälter 112 und das Verbindungselement 111 aus dem gleichen Material, in dem Ausführungsbeispiel aus Metall, aber auch aus Kunststoff, hergestellt sein. Alternativ können diese aber auch aus unterschiedlichen Materialen hergestellt sein.

So kann das Verbindungselement 111 auch als elastischer Kunststoffschlauch ausgebildet sein und um einen Fortsatz des Auffangbehälters 112 mit einer Metallschelle gespannt werden. Der Werkstoff aus welchem die Auffangvorrichtung 1, insbesondere der Auffangbehälter 112 und das Verbindungselement 111 bestehen, kann ja nach Art der Werkzeugmaschine 2 und des darin bearbeiteten Werkstoffs variieren.

Da sich zwischen Auffangbehälter 112 und Verbindungselement 111 der Verschluss 113 befindet, gelangen die Werkstücke 3 nur in dem geöffneten Zustand des Verschlusses 113 in das Verbindungselement 111, wobei sie nach dem Eintauchen in den Auffangbehälter 112 ständig von dem Fluid umgeben sind, und somit schlagstellenfrei in das Verbindungselement 111 überführt werden können. Wie oben erwähnt, werden die Werkstücke 3 allein durch ihre Schwerkraft zusammen mit dem Fluid weitergeleitet. In dem Verbindungselement 111 ist zumindest eine weitere Sperre 114 ausgebildet.

Ähnlich zu dem Verschluss 113 verschließt die Sperre 114 einen stromaufwärtigen Bereich in dem Verbindungselement 111 dicht gegenüber den Werkstücken 3 sowie dem Fluid gegen einen stromabwärtigen Bereich ab. Ebenso kann die Sperre 114 aber auch einen Zustand annehmen, in welchem das Fluid in den stromabwärtigen Bereich gelangt, die Werkstücke 3 aber zurückgehalten werden.

Dies ist beispielsweise bei einer nicht vollständig dicht abschließenden oder gitterartigen Ausgestaltung der Sperre 114 möglich. Mit anderen Worten kann die Sperre 114 den Querschnitt des Verbindungselements 111 ganz oder nur teilweise verschließen. In dem dargestellten Ausführungsbeispiel ist die Sperre 114 als ein Schieber ausgebildet. Alternativ kann die Sperre 114 auch als Blende oder Klappe ausgebildet sein.

Ebenso wie der Verschluss 113 wird auch die Sperre 114 automatisch durch die Steuerung der Werkzeugmaschine 2 betrieben. Nach einer Weitergabe der Werkstücke 3 aus dem Auffangbehälter 112 durch den geöffneten Zustand des Verschlusses 113 reihen sich die Werkstücke 3 stromaufwärts der zu diesem Zeitpunkt geschlossenen Sperre 114 auf.

Nachdem der Verschluss 113 wieder vollständig geschlossen ist und sich die Werkstücke 3 stromaufwärts der Sperre 114 aufgereiht haben, wird die Sperre 114 geöffnet und die Werkstücke 3 sowie das Fluid werden in dem Verbindungselement 111 weiter in Richtung zur Entnahmeeinrichtung 12 geleitet.

Um den Ausgabeprozess der Werkstücke 3 in dem Verbindungselement 111 besser kontrollieren zu können, können mehrere Sperren 114 in dem Verbindungselement 111 ausgebildet sein. Befinden sich beispielsweise vier Sperren 114 in vorgegebenen Abständen in dem Verbindungselement 111, so kann das Leiten in dem Verbindungselement 111 stufenartig erfolgen, wobei die Werkstücke 3 an jeder Sperre 114 abgebremst werden und somit unabhängig vom Neigungswinkel des Verbindungselements 111 keine hohe Geschwindigkeit erreichen.

Erfindungsgemäß können somit die Werkstücke 3 mit einer hohen Taktrate aus der Werkzeugmaschine 2 ausgeben werden, wodurch die Fertigungsdauer verkürzt werden kann, wobei der Fertigungsprozess gleichzeitig aufgrund des dämpfenden Effekts der fluidgeführten Weitergabe der ausgestoßenen Werkstücke 3 zur Entnahmeeinrichtung 12 der Fertigungsprozess dahingehend kontrolliert werden kann, dass die Werkstücke gleichmäßig in der Auffangvorrichtung 1 weitergeführt werden, ohne dass diese durch eine Schlageinwirkung Schlagstellen oder dergleichen erfahren.

Durch das Sammeln von Werkstücken 3 an bestimmten Abschnitten in der Auffangvorrichtung 1, d.h. dem Auffangbehälter 112 und dem Verbindungselement 111, ist zudem die Geschwindigkeit bei der Ausgabe der Werkstücke 3 aus der Werkzeugmaschine 2 und beim Weiterleiten der Werkstücke 3 in der Auffangvorrichtung 1 unabhängig voneinander steuerbar.

Am Innenumfang an der Unterseite des Verbindungselements 111 kann eine axial verlaufende, nutartige Vertiefung vorgesehen sein, in welcher die Werkstücke 3 hintereinander aufgereiht werden können. Die Steuerung der zumindest einen Sperre 114 erfolgt in Abhängigkeit des Verschlusses 113 beziehungsweise einer in Stromaufwärtsrichtung benachbarten Sperre 114.

Die Weitergabe der Werkstücke 3 zusammen mit dem Fluid erfolgt somit erfindungsgemäß taktweise durch aufeinanderfolgendes Ansteuern des Verschlusses 113 und der zumindest einen Sperre 114. Wenn der Verschluss 113 geöffnet wird, befindet sich die Sperre 114 in einem geschlossenen Zustand. Diese öffnet wenige Sekunden, etwa fünf Sekunden, nachdem sich der Verschluss 113 wieder geschlossen hat, um die Werkstücke 3 in dem Verbindungselement 111 bis zur nächsten Sperre 114 oder zu der Öffnung des Verbindungselements 111 weiterzuleiten.

Der Takt, in dem die Werkstücke 3 durch Öffnen des Verschlusses 113 zu der Sperre 114 und einer möglicherweise nachfolgenden Sperren 114 weitergeleitet werden, wird vorzugsweise derart gewählt, dass die Werkstücke 3 vor dem Weiterleiten in dem Verbindungselement 111 hintereinander ausgerichtet werden. Da die Werkstücke 3 je nach Viskosität des Fluids stark abgebremst werden, kann dies einige Sekunden in Anspruch nehmen. Daher wird die Taktzeit sowie die Dauer des Öffnungs- und Schließvorgangs von dem Verschluss 113 und der zumindest einen Sperre 114 in Abhängigkeit von der Viskosität des Fluids sowie der Anzahl der weiterzuleitenden Werkstücke 3 individuell eingestellt.

Alternativ kann der Betrieb des Verschlusses 113 und der zumindest einen Sperre 114 manuell erfolgen. Sind sowohl der Verschluss 113 als auch die Sperre 114 als Schieber ausgebildet, können diese manuell geöffnet und geschlossen werden. Denkbar ist, dass ein Signal eine bestimmte Anzahl von in der Auffangvorrichtung 1 befindlichen Werkstücken 3 oder von der Werkzeugmaschine 2 ausgegebenen Werkstücken 3 anzeigt, woraufhin dann das manuelle, gegebenenfalls zeitversetzte Öffnen von Verschluss 113 und/oder Sperre 114 erfolgen kann.

Zudem können der Verschluss 113 und die zumindest eine Sperre 114 über weitere Parameter als die Anzahl der Werkstücke 3 automatisch oder mechanisch gesteuert werden. So können diese in Abhängigkeit vom Gewicht der Werkstücke 3 öffnen und schließen. So kann beispielsweise die Sperre 114 als Klappe 114 ausgestaltet sein, die gegen die Rückstellkraft einer Feder mechanisch bei einem bestimmten, von den Werkstücken 3 auf die Klappe aufgebrachten Gewicht öffnen.

Nach dem Weiterleiten der Werkstücke 3 in dem Verbindungselement 111 gelangen die Werkstücke 3 schließlich zu einer stromabwärtigen Öffnung 1112 des Verbindungselements 111. Diese Öffnung 1112 liegt außerhalb des Gehäuses der Werkzeugmaschine 2, das heißt außerhalb des Arbeitsraums. Unterhalb dieser Öffnung 1112 ist die Entnahmeeinrichtung 12 angeordnet.

Die Entnahmeeinrichtung 12 weist ein zumindest teilweise mit dem Fluid gefülltes Behältnis 122 auf. In der in Fig. 1 dargestellten Ausführungsform ist das Behältnis 122 als eine Metallwanne ausgebildet. Auf dem Boden des Behältnisses 122 ist eine erste Sammelbehälterhalterung 123 derart angeordnet, dass ein Sammelbehälter 121 in dem Behältnis 122 unterhalb der Öffnung 1112 des Verbindungselements 111 abstellbar ist, so dass die Werkstücke 3 aus der Öffnung 1112 des Verbindungselements 111 direkt in den Sammelbehälter 121 fallen.

Die Werkstücke 3 fallen dabei aus dem Verbindungselement 111 in den in dem Behältnis 122 gelagerten Sammelbehälter 121, wo sie bis zur weiteren Verwendung verbleiben. Bei einer bevorzugten Ausführungsform ist dabei das Behältnis 122 derart mit Fluid befüllt, dass der Fluidspiegel im Behältnis 122 zumindest bis an den Rand des Sammelbehälters 121 reicht oder diesen übersteigt. Das Verbindungselement 111 kann ferner soweit in das Behältnis 122 und/oder in den Sammelbehälter 121 ragen, dass die Öffnung 1112 unterhalb des Füllstands liegt.

Somit werden die Werkstücke 3 noch vor Verlassen der Öffnung 1112 in dem Fluid aufgenommen und sinken in dem Fluid auf den Boden des Sammelbehälters 121. Die Öffnung 1112 kann aber auch über dem Fluidspiegel im Behältnis 122 liegen, so dass die Werkstücke 3 nach Verlassen des Verbindungselements 111 nach einem freien Fall erneut durch das Fluid gedämpft in das Fluid im Behältnis 112 eintauchen.

Zum Sammeln der aus dem Verbindungselement 111 ausgegebenen Werkstücke 3 enthält die Entnahmeeinrichtung 12 den Sammelbehälter 121, welcher gegenüber dem Fluid, nicht aber den Werkstücken 3 durchlässig ausgestaltet ist. In der dargestellten Ausführungsform ist der Sammelbehälter 121 beispielsweise als Edelstahl- oder Aluminiumkorb ausgebildet.

Der Sammelbehälter 121 kann aber auch aus einem netzartigen Gewebe, einem Drahtgitter oder einem Kunststoffkorb bestehen, sofern diese über eine ausreichende Festigkeit verfügen, dass sie nicht aufgrund des Gewichts oder dergleichen der Werkstücke 3 brechen. Der Sammelbehälter 121 kann somit aus einem festen aber auch einem flexiblen Werkstoff, beispielsweise einem reißfesten Netz, hergestellt sein. Ist der Sammelbehälter 121 aus einem flexiblen Werkstoff hergestellt, so spannt eine erste Sammelbehälterhalterung 123 den Sammelbehälter 121 auf und gibt diesem die nötige Festigkeit, um die Werkstücke 3 zu sammeln.

Da der Sammelbehälter 121 gegenüber dem Fluid durchlässig ausgestaltet ist, die Werkstücke 3 in diesem aber verbleiben sollen, sind die Abstände der Maschen in dem Sammelbehälter 121 entsprechend den Abmessungen der Werkstücke 3 zu wählen.

Der Sammelbehälter 121 befindet sich in der ersten Sammelbehälterhalterung 123 direkt unter der Öffnung 1112 des Verbindungselements 111. In der in Fig. 1 dargestellten Ausführungsform ist die erste Sammelbehälterhalterung 123 als pneumatisch betriebener, höhenverstellbarer Ständer 123 mit scherenhebebühnenartigen Hubmechanismus ausgebildet. Die erste Sammelbehälterhalterung 123 kann aber auch aus vier Zylindern mit teleskopartigen Mechanismen oder einem einzigen durch eine Zahnstange höhenverstellbaren Ständer ausgebildet sein.

Dieser Ständer kann anstelle einer automatischen Steuerung auch von Hand, etwa durch eine außen an der Entnahmeeinrichtung 12 angebrachte Kurbel, in der Höhe verstellt werden. Alternativ kann die erste Sammelbehälterhalterung 123 auch einen einfachen Rahmen bilden, in welchen der Sammelbehälter 121 abgestellt werden kann, ohne dass die erste Sammelbehälterhalterung 123 höhenverstellbar ist.

Sofern die erste Sammelbehälterhalterung 123 höhenverstellbar ist, wird diese durch den Zähler der Werkzeugmaschine 2 automatisch in Abhängigkeit von der Anzahl der ausgegebenen Werkstücke 3 in der Höhe verstellt. Indem die Höhe der ersten Sammelbehälterhalterung 123 und damit die Höhe des Sammelbehälters 121 verändert wird, kann die Wegstrecke der Werkstücke 3 nach dem Verlassen der Öffnung 1112 bis zu einem Auftreffen auf bereits in dem Sammelbehälter 121 gesammelten Werkstücken 3 oder auf dem Sammelbehälterboden weitestgehend konstant gehalten werden. Der Sammelbehälter 121 wird dabei abhängig von der Anzahl der bereits gesammelten Werkstücke 3 nach unten gefahren.

Alternativ kann der Sammelbehälter 121 auch in Abhängigkeit des Gewichts der aufgenommenen Werkstücke 3 höhenverstellbar sein. Ebenso kann der Sammelbehälter 121 mechanisch alleine durch das Gewicht der aufgenommenen Werkstücke 3 nach unten absinken. Etwa kann die erste Sammelbehälterhalterung 123 federelastisch ausgebildet sein, und je nach Gewicht der Werkstücke 3 gestaucht werden und nach unten absinken.

Zusammen mit den Werkstücken 3 gelangt auch das Fluid aus dem Verbindungselement 111 in den Sammelbehälter 121. Das Behältnis 122 ist gegenüber dem Fluid, in diesem Ausführungsbeispiel dem Schneidöl, dicht ausgebildet. Da der Sammelbehälter 121 gegenüber dem Fluid durchlässig ausgebildet ist, füllt das Fluid das Behältnis 122. Dieser Füllstand in dem Behältnis 122 wird als ein zweiter Füllstandbereich in einem vorbestimmten Bereich gehalten.

Das Behältnis 122 wird über das Verbindungselement 111 mit dem Fluid aus dem Tank der Werkzeugmaschine 2 befüllt. Hierbei kann der Einfüllvorgang in das Behältnis 122 zusammen mit der Ausgabe von Werkstücken 3 taktweise erfolgen. Alternativ kann das Füllen des Behältnisses 122 auch derart erfolgen, dass nur das Fluid durch den Verschluss 113 und die zumindest eine Sperre 114 in das Behältnis 122 gelangt, während die Werkstücke 3 zurückgehalten werden.

Auch der Füllstand im Behältnis 122 wird durch die Steuerung der Werkzeugmaschine 2 überwacht und gesteuert. Zudem können beispielsweise am Anfang, vor dem Beginn der Bearbeitung beim Start der Werkzeugmaschine 2, der Verschluss 113 sowie die zumindest eine Sperre 144 vollständig geöffnet werden, um das Behältnis 122 bis zum Erreichen des gewünschten Füllstands mit Fluid zu füllen. So wird sichergestellt, dass schon das erste bearbeitete und ausgegebene Werkstück 3 schlagstellenfrei in das Behältnis 122 gelangen kann.

Um den Füllstand des Fluids in dem Behältnis 122 innerhalb des vorgegebenen Bereichs zu halten, kann Fluid durch ein Rücklaufrohr 41 zurück zu der Werkzeugmaschine 2, beispielsweise in das Flachbett 21 der Werkzeugmaschine 2, geführt werden. Vor dem Rückführen des Fluids können Reinigungsmechanismen physikalischer oder chemischer Art zwischengeschaltet sein. Beispielsweise können Reinigungssubstanzen zugeführt oder in der Auffangvorrichtung 1 zusätzlich zu dem Fluid verwendete Medien neutralisiert werden, bevor das Fluid zu der Werkzeugmaschine 2 rückgeführt wird.

In der dargestellten Ausführungsform ist das Behältnis innen 122 mit einer korrosionsbeständigen Schicht ausgekleidet und auf einem fahrbaren Gestell 43 gelagert. Das Gestell 43 ist hier als Rollwagen ausgebildet und weist vier Füße auf. An diesen Füßen, zumindest aber an zwei Füßen, sind jeweils Rollen 45 ausgebildet und zumindest ein Fuß weist eine Bremse auf. Vermittels dieser an dem Gestell 43 angebrachten Rollen 45 kann die Auffangvorrichtung 1 einfach und schnell von einer Werkzeugmaschine 2 zu einer anderen Werkzeugmaschine 2 geschoben werden. Wird beispielsweise die Werkzeugmaschine 2 gerade umgerüstet, kann die Auffangvorrichtung 1 zur nächsten Werkzeugmaschine 2 geschoben werden.

Alternativ können anstelle der Rollen 45 andere Mittel vorgesehen sein, über welche die Auffangvorrichtung 1 bewegbar ist. Oder die Auffangvorrichtung 1 kann, je nach den örtlichen Gegebenheiten oder Anforderungen bei der Fertigung der Werkstücke ortsfest ausgebildet werden.

Wie oben beschrieben ist fallen die Werkstücke 3 aus der Öffnung 1112 des Verbindungselements 111 in den Sammelbehälter 121. In diesem Sammelbehälter 121 wird eine bestimmte Anzahl von Werkstücken 3 gesammelt. Nachdem die gewünschte Anzahl an Werkstücken 3 in dem Sammelbehälter 121 gesammelt wurde, wird dieser Sammelbehälter 121 aus der ersten Sammelbehälterhalterung 123 entnommen und durch einen leeren Sammelbehälter 121 ersetzt. Der gefüllte Sammelbehälter 121 wird anschließend in eine weitere, an dem Behältnis 122 befestigte zweite Sammelbehälterhalterung 124 überführt.

Die zweite Sammelbehälterhalterung 124 ist als ein Halter ausgeführt. Das Überführen des Sammelbehälters 121 von der ersten Sammelbehälterhalterung 123 zu der zweiten Sammelbehälterhalterung 124 erfolgt hier automatisch über einen Fördermechanismus, beispielsweise ein Förderband oder einen Kettentrieb. Alternativ können auch weitere Hebemechanismen, wie ein extern angebrachter Roboter, verwendet werden.

Das Überführen kann aber auch manuell durch den Maschinenführer der Werkzeugmaschine 2 erfolgen. Dabei kann die Auffangvorrichtung 1 durch ein Signal, etwa einen Ton oder ein Blinken, dem Maschinenführer anzeigen, dass der Sammelbehälter 121 gefüllt ist. Damit muss der Maschinenführer nicht an der Auffangvorrichtung 1 warten, sondern kann während dem Füllvorgang anderen Tätigkeiten nachgehen.

Wird der Sammelbehälter manuell versetzt, ist denkbar, dass das Füllvermögen des Sammelbehälters 121 in Abhängigkeit von den zu fertigenden Werkstücken 3 derart bemessen ist, dass der Sammelbehälter 121 durch den Maschinenführer problemlos versetzt werden kann. So ist beispielsweise denkbar, dass bei einer manuellen Versetzung des Sammelbehälters 121 mit großformatigen, schweren Werkstücken 3 nur "eine Handvoll" an Werkstücken 3 in dem Sammelbehälter 121 aufgenommen wird, bevor dieser gegen einen neuen Sammelbehälter 121 ausgetauscht wird, während bei kleinformatigen, leichten Werkstücken 3 eine Vielzahl von Werkstücken in dem Sammelbehälter 121 gesammelt werden kann, bevor der Maschinenführer oder ein anderer, damit beauftragter Arbeiter, den vollen Sammelbehälter 121 gegen einen neuen austauscht, mithin den vollen Sammelbehälter 121 zum Abtropfen in der der zweiten Sammelbehälterhalterung 124 abstellt.

Der Sammelbehälter 121 wird nämlich derart in der zweiten Sammelbehälterhalterung 124 über dem Behältnis 122 gelagert, dass das Fluid aus dem Sammelbehälter 121 und das an den Werkstücken 3 haftende Fluid in das Behältnis 122 abtropfen kann. Hierdurch werden die Werkstücke 3 vor der Weitergabe zu nachfolgenden Anlagen weitgehend gereinigt.

Für die Rückgewinnung des Fluids weist das Behältnis 122 am Boden eine Öffnung für ein Rücklaufrohr 41 auf. Weiter ist der Boden des Behältnisses 122 zumindest in einem Bereich schräg nach unten zulaufend ausgebildet und hat seinen tiefsten Punkt in dem Bereich der Öffnung. Damit sinken Späne und andere Abfallstoffe, welche während des Bearbeitungsprozesses anfallen, in Richtung der Öffnung. In der Öffnung ist ein Filterelement 42 angeordnet, worin sich die Späne und Abfallstoffe sammeln. In der hier beschriebenen Ausführungsform ist das Filterelement 42 beispielsweise als Metallgewebe ausgeführt.

Durch ein Entleeren des Filterelements 42 können die Späne und Abfallstoffe leicht aus der Entnahmeeinrichtung 12 entnommen und anschließend entsorgt werden. Alternativ können statt des Filterelements 42 einfache Gitter, Membranfilter oder ähnliche Filter zur Reinigung des verwendeten Fluids verwendet werden. Neben einem physikalischen Filter sind hier, wie oben erwähnt, auch chemische Filter einsetzbar.

Das Rücklaufrohr 41 leitet das Fluid, hier das Schneidöl, zurück zu dem Fluidsystem der Werkzeugmaschine 2, beispielsweise zu dem Flachbett 21 der Werkzeugmaschine 2. Auch das während der Fertigung verwendete Schneidöl tropft in das Flachbett 21 der Werkzeugmaschine 2. Somit ist es möglich, das Schneidöl in einem nahezu geschlossenen Kreislauf in der Werkzeugmaschine 2 zu halten, ohne dass der Schneidölvorrat häufig nachgefüllt werden muss. Je nach Art des verwendeten Fluids wird dieses von der Auffangvorrichtung 1 dem jeweils hierfür vorgesehenen Sammelbecken, etwa dem Flachbett 21, oder dem jeweiligen Tank der Werkzeugmaschine 2 zugeführt.

Das Rücklaufrohr 41 ist mit einer Pumpe 4 versehen. Auch diese Pumpe 4 wird durch die Steuerung der Werkzeugmaschine 2 gesteuert, so dass der Füllstand des Fluids in dem Behältnis 122 innerhalb des zweiten vorbestimmten Bereichs liegt. Der Füllstand in dem Behältnis 112 wird dabei beispielsweise durch Ansteuern des Verschlusses 113, der zumindest einen Sperre 114 sowie der Pumpe 4 des Rücklaufrohrs 41 mit Hilfe der Steuerung der Werkzeugmaschine 2 geregelt. Alternativ kann die Auffangvorrichtung 1 eine separate Steuerung enthalten, welche den Füllstand in dem Auffangbehälter 112 in dem ersten Bereich und den Füllstand in dem Behältnis 122 in dem zweiten Bereich hält.

Durch diese Konfiguration kann der Füllstand im Behältnis 122 kontrolliert und gesteuert werden. Um ein schlagstellenfreies Ausgeben der Werkstücke 3 aus dem Verbindungselement 111 zu gewährleisten, ist der Füllstand des Fluids im Sammelbehälter 121 vorzugsweise weitgehend unabhängig von dem Füllstand in dem Behältnis 122 über die erste Sammelbehälterhalterung 123 einstellbar, sofern diese höhenveränderlich ausgestaltet ist. Zusätzlich oder alternativ zu einer höhenveränderlichen Ausgestaltung der ersten Sammelbehälterhalterung 123 kann auch das Behältnis 122 durch teleskopartig ausfahrbare Füße des Gestells 43 höhenverstellbar sein.

Damit kann ein Abstand d zwischen der Öffnung 1112 des Verbindungselements 111 und den in dem Sammelbehälter 121 bereites gesammelten Werkstücken 3 sowohl durch ein Verstellen der Höhe der ersten Sammelbehälterhalterung 123 als auch der Füße des Gestells 43 oder durch eine entsprechend kombinierte Verstellung beider Mechanismen miteinander eingestellt werden, um die schlagstellenfreie Ablage der Werkstücke aus der Werkzeugmaschine 2 über das dem Verbindungselement 111 in dem Sammelbehälter 121 weiter zu unterstützen.

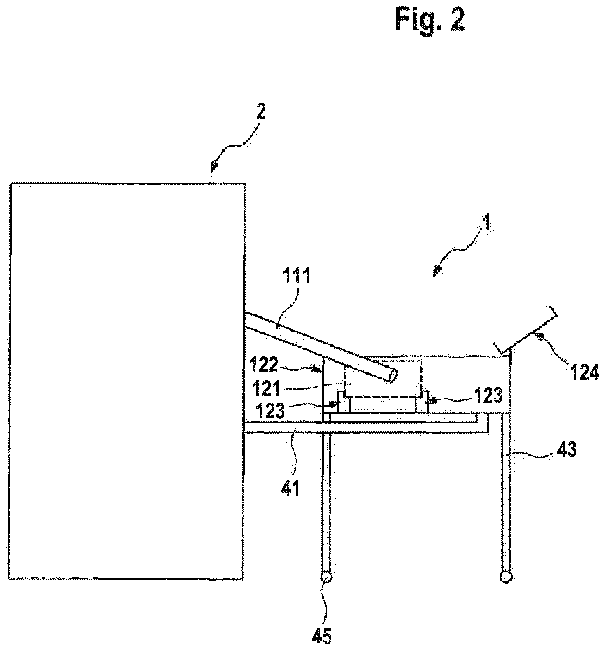

Fig. 2 zeigt eine schematische Konfiguration der Auffangvorrichtung 1, welche während der Verwendung unmittelbar im Zugriffsbereich der Werkzeugmaschine 2 aufgestellt ist. Wie aus Fig. 2 zu entnehmen ist, lässt sich die Auffangvorrichtung 1 leicht bei bereits vorhandenen Werkzeugmaschinen 2 nachrüsten. Somit kann die Auffangvorrichtung 1 bei verschiedenartigen Werkzeugmaschinen 2 zur schlagstellenfreien Ausgabe verschiedenartiger Werkstücke 3 verwendet werden.

Die Materialbeschaffenheit der Auffangvorrichtung 1 kann dabei an den jeweiligen Bearbeitungsprozess der Werkzeugmaschine 2 angepasst gestaltet sein. So kann beispielsweise die Auffangvorrichtung 1 aus Kunststoff hergestellt sein, wenn in der Werkzeugmaschine 2 Kunststoffe oder anderer, weniger feste bzw. harte Werkstücke 3 bearbeitet werden.

Denkbar ist auch die Nutzung unterschiedlicher Materialen. So kann beispielsweise das Verbindungselement 111 aus Aluminium und der Auffangbehälter 112 aus Kunststoff hergestellt sein. Alternativ kann die Entnahmeeinrichtung 12 als ortsfest installierte Basis verwendet werden, die beispielsweise aus Aluminium hergestellt ist, während die Aufnahmeeinrichtung 11 als separates, austauschbares Element ausgebildet ist, und je nach Größe der zu fertigenden Werkstücke 3 zwischen der Werkzeugmaschine 2 und der Entnahmeeinrichtung 12 installiert wird. Beispielsweise kann hierbei die Größe des Auffangbehälters 112 je nach Abmessung der ausgegebenen Werkstücke 3 und der Geometrie der Werkzeugmaschine 2 variieren oder unterschiedliche Materialien können zu Einsatz kommen.

Zur Befestigung der Aufnahmeeinrichtung 11 an der Werkzeugmaschine sind an der Aufnahmeeinrichtung 11 Befestigungsmittel für Schraubverbindungen, Stiftverbindungen oder ähnliches vorgesehen. Alternativ kann die Aufnahmeeinrichtung 11 fest durch Verschweißen oder Verkleben mit der Werkzeugmaschine 2 verbunden sein. Denkbar ist auch ein Gestell, welches im Arbeitsraum der Werkzeugmaschine 2 aufgestellt werden kann, und in dem die Aufnahmeeinrichtung 11 eingehängt oder anderweitig befestigt werden kann.

Alternativ oder zusätzlich kann die Aufnahmeeinrichtung 11 aber auch fest mit der Entnahmeeinrichtung 12 verbunden sein. Auch hier sind lösbare Verbindungen, wie ein Verschrauben, aber auch unlösbare Verbindungen, beispielsweise über Verschweißen möglich.

Bei der nachträglichen Installation der Auffangvorrichtung 1 an der Werkzeugmaschine 2 wird der Auffangbehälter 112 in dem Arbeitsraum platziert, das Einfüllrohr 51 mit dem Tank der Werkzeugmaschine 2 sowie das Rücklaufrohr 41 mit einem Sammelbecken, beispielsweise dem Flachbett 21, im unteren Bereich der Werkzeugmaschine 2 oder alternativ mit dem Tank der Werkzeugmaschine 2 verbunden. Dadurch wird das Fluidsystem der Auffangvorrichtung 1 mit dem Fluidsystem der Werkzeugmaschine 2 verbunden werden.

Die Auffangvorrichtung 1 kann aber auch über einen eigenen Fluidkreislauf verfügen. Dabei wird das verwendete Fluid aus dem Behältnis 122 der Entnahmeeinrichtung 12 zurück zu dem Auffangbehälter 112 gepumpt. In diesem Fall ist das Rücklaufrohr 41 mit dem Einfüllrohr 51 über eine Pumpe verbunden. Mit einer derartigen, über einen eigenständigen Fluidkreislauf verfügenden Auffangvorrichtung 1 kann diese insbesondere auch bei einer fluidlösen Fertigung von Werkstücken, das heißt bei einer Trockenbearbeitung ohne Schneidöl oder dergleichen, eingesetzt werden.

Wie vorstehend dargestellt, betrifft die vorliegende Erfindung ein System mit einer Werkzeugmaschine 2 sowie einer Auffangvorrichtung 1, die eine mit einem Fluid befüllbare Aufnahmeeinrichtung 11 zum Auffangen von aus der Werkzeugmaschine 2 ausgeworfenen Werkstücken 3, eine mit einem Fluid befüllbare Entnahmeeinrichtung 12 zum Sammeln der Werkstücke 3, sowie ein mit einem Fluid befüllbares Verbindungselement 111 aufweist.

Die Aufnahmeeinrichtung 11 und die Entnahmeeinrichtung 12 sind über das Verbindungselement 111 miteinander verbunden. Die Aufnahmeeinrichtung 11 ist derart mit dem Fluid befüllbar, dass die aus der Werkzeugmaschine 2 ausgeworfenen Werkstücke 3 vollständig in das darin enthaltene Fluid eintauchen. Die in der Aufnahmeeinrichtung 11 aufgefangenen Werkstücke 3 können durch das zumindest teilweise mit Fluid befüllte Verbindungselement 111 in die zumindest teilweise mit Fluid befüllte Entnahmeeinrichtung 12 gelangen. Die Erfindung betrifft ferner eine Auffangvorrichtung 1 für ein derartiges System sowie ein Auffangverfahren für in einer Werkzeugmaschine bearbeitete Werkstücke.

## Patentansprüche

1. System aufweisend:
eine Werkzeugmaschine (2) mit einer Werkstückauslassvorrichtung (5), zum Auslassen von in der Werkzeugmaschine (2) bearbeiteten Werkstücken (3),
einen Tank für ein in der Werkzeugmaschine (2) verwendetes Fluid, welches in der Werkzeugmaschine (2) als Kühl-, Schmier- und/oder Bearbeitungsmittel, vorzugsweise als Schneidöl, verwendet wird,
ein Leitungssystem für das in der Werkzeugmaschine (2) verwendete Fluid,
eine erste Pumpe zum Zirkulieren des Fluids in dem Leitungssystem, sowie eine Auffangvorrichtung (1), mit:
einer mit einem Fluid befüllbaren Aufnahmeeinrichtung (11) zum Auffangen von aus der Werkzeugmaschine (2) ausgeworfenen Werkstücken (3),
einer mit dem Fluid befüllbaren Entnahmeeinrichtung (12) zum Sammeln von Werkstücken (3), sowie
einem mit dem Fluid befüllbaren, vorzugsweise rohrförmig ausgebildeten, Verbindungselement (111), wobei:
die Aufnahmeeinrichtung (11) und die Entnahmeeinrichtung (12) über das Verbindungselement (111) miteinander verbunden sind,
die Aufnahmeeinrichtung (11) derart mit dem Fluid befüllbar ist, dass die aus der Werkzeugmaschine (2) ausgeworfenen Werkstücke (3) vollständig in das in der Aufnahmeeinrichtung (11) enthaltene Fluid eintauchen, und
die in der Aufnahmeeinrichtung (11) aufgefangenen Werkstücke (3) durch das zumindest teilweise mit Fluid befüllte Verbindungselement (111) in die zumindest teilweise mit Fluid befüllte Entnahmeeinrichtung (12) gelangen können,
wobei die Aufnahmeeinrichtung (11) zumindest teilweise unter der Werkstückauslassvorrichtung (5) der Werkzeugmaschine (2) anordenbar ist und zumindest eine in dem Verbindungselement (111) angeordnete Sperre (114) und einen Auffangbehälter (112) zum Auffangen von aus der Werkstückauslassvorrichtung (5) ausgeworfenen Werkstücken (3) aufweist, mit einer Auffangöffnung (1121), welche horizontal nach oben zu der Werkstückauslassvorrichtung (5) geöffnet ist, und einen Verschluss (113), der stromaufwärts der zumindest einen Sperre (114) angeordnet ist, um die in dem Auffangbehälter (112) vorgesehene Öffnung zu verschließen,
wobei der Auffangbehälter (112) aus dem Tank der Werkzeugmaschine (2) über ein Einfüllrohr (51) mit dem Fluid befüllbar ist, so dass Werkstücke (3), welche von der Werkstückauslassvorrichtung (5) ausgeworfen werden, vollständig in das in dem Auffangbehälter (112) enthaltene Fluid eintauchen, und
wobei die zumindest eine Sperre (114) und der Verschluss (113) abwechselnd in einen geöffneten und geschlossenen Zustand bringbar sind, so dass die Werkstücke (3) und das Fluid durch den geschlossenen Zustand in der Aufnahmeeinrichtung (11) gehalten werden und durch den geöffneten Zustand von der Aufnahmeeinrichtung (11) in die Entnahmeeinrichtung (12) gelangen können.

2. System nach Anspruch 1, wobei:
das Verbindungselement (111) zur Außenseite der Werkzeugmaschine (2) ragt und zum Leiten der Werkstücke (3) aus dem Auffangbehälter (112) zu der Entnahmeeinrichtung (12) nach unten geneigt ist, und
das Verbindungselement (111) an seinem zu dem Auffangbehälter (112) weisenden Ende mit dem Auffangbehälter (112), vorzugsweise einstückig, verbunden ist, so dass in dem Auffangbehälter (112) befindliche Werkstücke (3) durch eine in dem Auffangbehälter (112) vorgesehene Öffnung in das Verbindungselement (111) gelangen können.

3. System nach Anspruch 1, wobei der Verschluss (113) derart konfiguriert ist, dass er durch einen Zähler der Werkzeugmaschine (2) gesteuert öffnet und schließt, und die zumindest eine Sperre (114) derart konfiguriert ist, dass sie abhängig von dem Verschluss (113) öffnet und schließt,
wobei das Öffnen und Schließen des Verschlusses (113) und der zumindest einen Sperre (114) derart aufeinander abstimmbar sind, dass sich die zumindest eine Sperre (114) in Abhängigkeit vom Öffnen und Schließen des Verschlusses (113) öffnet und schließt, zur insbesondere taktweisen Förderung der aus der Werkzeugmaschine (2) in die Aufnahmeeinrichtung (11) ausgestoßenen Werkstücke (3) durch das Verbindungselement (111) in die Entnahmeeinrichtung (12).

4. System nach einem Anspruch 2 oder 3, wobei die Entnahmeeinrichtung (12) einen Sammelbehälter (121) zum Sammeln von Werkstücken (3) aufweist, welche aus einer in dem stromabwärtigen Ende des Verbindungselements (111) ausgebildeten Auslassöffnung (1112) in den Sammelbehälter (121) fallen, wobei der Sammelbehälter (121) zumindest teilweise für das Fluid durchlässig ausgestaltet ist.

5. System nach einem der Ansprüche 2 bis 4, wobei die Entnahmeeinrichtung (12) und/oder der darin aufgenommene Sammelbehälter (121), vorzugsweise über einen, insbesondere automatisch betätigten, Hebemechanismus, höhenverstellbar sind, so dass ein Abstand (d) zwischen der Auslassöffnung (1112) und den in dem Sammelbehälter (121) gesammelten Werkstücken (3) in Abhängigkeit von der Anzahl der im Sammelbehälter (121) gesammelten Werkstücke (3), vorzugsweise automatisch, veränderbar ist.

6. System nach einem der Ansprüche 2 bis 5, weiter aufweisend:
eine Füllstandsteuerung, welche konfiguriert ist, um einen Füllstand des Fluids in dem Auffangbehälter (112) derart zu steuern, dass der Füllstand innerhalb eines ersten vordefinierten Bereichs liegt, und/oder um einen Füllstand des Fluids in der Entnahmeeinrichtung (12) derart zu steuern, dass der Füllstand innerhalb eines en vordefinierten Bereichs liegt.

7. System nach einem der Ansprüche 2 bis 6, weiter aufweisend eine zweite Pumpe (4), welche derart konfiguriert ist, um das Fluid, vorzugsweise durch die Füllstandsteuerung gesteuert, aus der Entnahmeeinrichtung (12) über ein Rücklaufrohr (41), vorzugsweise durch ein in dem Rücklaufrohr (41) angeordnetes Filterelement (42), zurück in das Leitungssystem der Werkzeugmaschine (2) zu fördern.

8. System nach einem der Ansprüche 2 bis 7, wobei:
die Entnahmeeinrichtung (12) als ein horizontal nach oben geöffnetes Behältnis (122) ausgebildet ist, das derart auf einem, vorzugsweise fahrbaren, Ständer (43) gelagert ist, dass der Auffangbehälter (112) der Aufnahmeeinrichtung (11) der Auffangvorrichtung (1) unter der Werkstückauslassvorrichtung (5) der Werkzeugmaschine (2) positionierbar ist,
eine erste Sammelbehälterhalterung (123) in dem Behältnis (122) angeordnet ist, in welcher der Sammelbehälter (121) derart gehalten ist, dass dieser zumindest teilweise von dem Fluid durchsetzt ist, und
eine zweite, von der ersten Sammelbehälterhalterung (123) separat ausgebildete, Sammelbehälterhalterung (124) an einem höher gelegenen Bereich des Behältnisses (122) als die erste Sammelbehälterhalterung (123) angeordnet ist, in welcher der Sammelbehälter (121) abstellbar ist, so dass Fluid zurück in das Behältnis (122) strömen kann.

9. System nach einem der Ansprüche 1 bis 8, wobei das Fluid, mit welchem die Auffangvorrichtung (1) zumindest teilweise befüllbar ist, das in der Werkzeugmaschine (2) genutzte Fluid ist.

10. Auffangvorrichtung (1) zur Verwendung in einem System nach einem der
Ansprüche 1 bis 8, aufweisend:
eine mit einem Fluid befüllbare Aufnahmeeinrichtung (11) mit einem horizontal nach oben geöffneten Auffangbehälter (112) zum Auffangen von aus einer separat vorgesehenen Werkzeugmaschine (2) ausgeworfenen Werkstücken (3), wobei die Aufnahmeeinrichtung (11) derart mit Fluid befüllbar ist, dass darin aufgenommene Werkstücke (3) vollständig in das Fluid eintauchen,
eine mit dem Fluid befüllbare Entnahmeeinrichtung (12) zum Sammeln der Werkstücke (3), sowie
ein mit dem Fluid befüllbares, vorzugsweise rohrförmig ausgebildetes, Verbindungselement (111), das die Aufnahmeeinrichtung (11) und die Entnahmeeinrichtung (12) derart miteinander verbindet, dass die in der Aufnahmeeinrichtung (11) aufgefangenen Werkstücke (3) durch eine in dem Auffangbehälter (112) vorgesehene Öffnung über das zumindest teilweise mit Fluid befüllte Verbindungselement (111) in die zumindest teilweise mit Fluid befüllte Entnahmeeinrichtung (12) förderbar sind,
wobei die Aufnahmeeinrichtung (11) aufweist:
zumindest eine in dem Verbindungselement (111) angeordnete Sperre (114), und
einen Verschluss (113), welcher stromaufwärts der zumindest einen Sperre (114) angeordnet ist, um die in dem Auffangbehälter (112) vorgesehene Öffnung zu verschließen,
wobei die zumindest eine Sperre (114) und der Verschluss (113) abwechselnd in einen geöffneten und geschlossenen Zustand bringbar sind, so dass die Werkstücke (3) und das Fluid durch den geschlossenen Zustand in der Aufnahmeeinrichtung (11) gehalten werden und durch den geöffneten Zustand von der Aufnahmeeinrichtung (11) in die Entnahmeeinrichtung (12) gelangen können.

11. Auffangvorrichtung (1) nach Anspruch 10, wobei die Entnahmeeinrichtung (12) aufweist:
ein Behältnis (122), welches horizontal nach oben geöffnet und mit dem Fluid befüllbar ist, wobei das Behältnis (122) auf einem, vorzugsweise fahrbaren, Ständer (43) gelagert ist, vermittels welchem der Auffangbehälter (112) der Aufnahmeeinrichtung (11) der Auffangvorrichtung (1) unter einer Werkstückauslassvorrichtung (5) der Werkzeugmaschine (2) positionierbar ist,
einen gegenüber dem Fluid durchlässigen Sammelbehälter (121) zum Sammeln der Werkstücke (3), wobei der Sammelbehälter (121) in dem Behältnis (122) in einer ersten Sammelbehälterhalterung (123) anordenbar ist, so dass der Sammelbehälter (121) zumindest teilweise von dem Fluid in dem Behältnis (122) durchsetzt ist, eine zweite, von der ersten Sammelbehälterhalterung (123) separat ausgebildete, Sammelbehälterhalterung (124), welche an einem höher gelegenen Bereich des Behältnisses (122) als die erste Sammelbehälterhalterung (123) angeordnet ist, und in welcher der Sammelbehälter (121) abstellbar ist, so dass Fluid zurück in das Behältnis (122) strömen kann,
wobei die Entnahmeeinrichtung (12) und/oder der Sammelbehälter (121) derart höhenverstellbar sind, dass ein Abstand (d) zwischen einer dem Sammelbehälter (121) zugewandten Auslassöffnung (1112) des Verbindungselements (111) und den in dem Sammelbehälter (121) gesammelten Werkstücken (3) in Abhängigkeit von der Anzahl der im Sammelbehälter (121) gesammelten Werkstücke (3), vorzugsweise automatisch, veränderbar ist.

12. Auffangverfahren für in einer Werkzeugmaschine (2) bearbeitete Werkstücke (3), unter Verwendung einer Auffangvorrichtung (1) nach Anspruch 10 oder 11 in einem System nach einem der Ansprüche 1 bis 8, aufweisend:
Bearbeiten zumindest eines Werkstücks (3) in einer Werkzeugmaschine (2), Ausgeben des zumindest einen Werkstücks (3) aus der Werkzeugmaschine (2),
Auffangen des Werkstücks (3), welches aus der Werkzeugmaschine (2) ausgeworfen wird, in einem Auffangbehälter (112) einer Aufnahmeeinrichtung (11) einer Auffangvorrichtung (1), wobei der Auffangbehälter (112) aus einem Tank der Werkzeugmaschine (2) mit einem Fluid gefüllt wird, so dass das Werkstück (3) vollständig in das Fluid eintaucht,
Leiten des Werkstücks (3) von dem Auffangbehälter (112) über ein, vorzugsweise rohrförmig, ausgebildetes Verbindungselement (111) der Auffangvorrichtung (1) zu einer Entnahmeeinrichtung (12) der Auffangvorrichtung (1),
Sammeln der Werkstücke (3) in einem zumindest teilweise mit dem Fluid gefüllten Sammelbehälter (121) in der Entnahmeeinrichtung (12),
Halten des zumindest einen Werkstücks (3) und des Fluids in dem Auffangbehälter (112) durch einen Verschluss (113) nach dem Auffangen des aus der Werkzeugmaschine (2) ausgeworfenen Werkstücks (3),
Weiterleiten zumindest einen Werkstücks (3) aus dem Auffangbehälter (112) in das Verbindungselement (111) durch Öffnen des Verschlusses (113) in Abhängigkeit von der Anzahl der in dem Auffangbehälter (112) aufgenommenen Werkstücke (3) zur Weiterförderung in Richtung zu dem Sammelbehälter (121),
Halten des zumindest einen Werkstücks (3) und des Fluids in dem Verbindungselement (111) über zumindest eine Sperre (114),
Weiterleiten des zumindest einen Werkstücks (3) aus dem Verbindungselement (111) in den Sammelbehälter (121) durch Öffnen der zumindest eine Sperre (114) abhängig von der Ansteuerung des Verschlusses (113),
Anpassen eines Abstandes (d) zwischen einer Auslassöffnung (1112) des Verbindungselements (111) und den in dem Sammelbehälter (121) gesammelten Werkstücken (3), vorzugsweise automatisch, in Abhängigkeit von der Anzahl der im Sammelbehälter (121) gesammelten Werkstücke (3),
Entnehmen des in einer ersten in der Entnahmeeinrichtung (12) angeordneten Sammelbehälterhalterung (123) gelagerten, zumindest teilweise von dem Fluid durchsetzten, Sammelbehälters (121) mit den darin gesammelten Werkstücken (3) aus der ersten Sammelbehälterhalterung (123),
Übergeben, vorzugsweise automatisch, des aus der ersten Sammelbehälterhalterung (123) entnommenen Sammelbehälters (121) zu einer zweiten Sammelbehälterhalterung (124), in welcher das Fluid aus dem Sammelbehälter (121) zurück in die Entnahmeeinrichtung (12) abtropfen kann, und
Weiterfördern des mit Werkstücken (3) gefüllten Sammelbehälters (121) von der zweiten Sammelbehälterhalterung (124) zu einer nachgelagerten Bearbeitungseinrichtung.

## Claims

1. A system, comprising:
a machine tool (2) having a workpiece discharge device (5) for discharging workpieces (3) machined in the machine tool (2),
a tank for a fluid used in the machine tool (2), which fluid is used in the machine tool (2) as a coolant, lubricant and/or processing medium, preferably as a cutting oil,
a piping system for the fluid used in the machine tool (2),
a first pump for circulating the fluid in the piping system, as well as a catching device (1), comprising:
a fluid-fillable receiving means (11) for catching workpieces (3) ejected from the machine tool (2),
a fluid-fillable removal means (12) for collecting workpieces (3), as well as
a fluid-fillable connecting member (111) that is preferably of tubular design, wherein:
the receiving means (11) and the removal means (12) are connected to each other via the connecting member (111),
the receiving means (11) can be filled with the fluid in such a manner that the workpieces (3) ejected from the machine tool (2) are fully immersed in the fluid contained in the receiving means (11), and
the workpieces (3) caught in the receiving means (11) can access the removal means (12) that is at least partially filled with fluid through the connecting member (111) that is at least partially filled with fluid,
wherein the receiving means (11) can be arranged at least in part below the workpiece discharge device (5) of the machine tool (2) and comprises at least one stop (114) arranged in the connecting member (111) and a catching vessel (112) for catching workpieces (3) ejected from the workpiece discharge device (5) which includes a catching aperture (1121) that is horizontally open at the top toward the workpiece discharge device (5) and a closure (113) that is arranged upstream of the at least one stop (114) to close the aperture provided in the catching vessel (112),
wherein the catching vessel (112) can be filled with the fluid from the tank of the machine tool (2) via a filler tube (51) such that workpieces (3) ejected from the workpiece discharge device (5) are fully immersed in the fluid contained in the catching vessel (112), and
wherein the at least one stop (114) and the closure (113) can be put alternatingly in an open and closed state such that the workpieces (3) and the fluid are held in the receiving means (11) by the closed state and are enabled to access the removal means (12) from the receiving means (11) by the open state.

2. The system according to claim 1, wherein:
the connecting member (111) protrudes to the outside of the machine tool (2) and is downwardly inclined to direct the workpieces (3) from the catching vessel (112) to the removal means (12), and
the connecting member (111) is connected, preferably integrally, to the catching vessel (112) at its end facing the catching vessel (112), so that workpieces (3) present in the catching vessel (112) can access the connecting member (111) through an aperture provided in the catching vessel (112).

3. The system according to claim 1, wherein the closure (113) is configured to open and close under the control of a counter of the machine tool (2), and the at least one stop (114) is configured to open and close depending on the closure (113),
wherein the opening and closing of the closure (113) and the at least one stop (114) can be coordinated in such a manner that the at least one stop (114) opens and closes depending on the opening and closing of the closure (113), to convey, in particular in a cyclical manner, the workpieces (3) that are ejected from the machine tool (2) into the receiving means (11) through the connecting member (111) into the removal means (12).

4. The system according to claim 2 or 3, wherein the removal means (12) comprises a collecting vessel (121) for collecting workpieces (3) that fall into the collecting vessel (121) from a discharge aperture (1112) formed in the downstream end of the connecting member (111), wherein the collecting vessel (121) is designed to be at least partially permeable to the fluid.

5. The system according to any of claims 2 to 4, wherein the removal means (12) and/or the collecting vessel (121) received therein can be preferably adjusted in height via a lifting mechanism that is, in particular, operated automatically, so that a distance (d) between the discharge aperture (1112) and the workpieces (3) collected in the collecting vessel (121) can be changed, preferably automatically, depending on the number of workpieces (3) collected in the collecting vessel (121).

6. The system according to any of claims 2 to 5, further comprising:
a fill level controller configured to control a fill level of the fluid in the catching vessel (112) such that the fill level lies within a first predefined range, and/or to control a fill level of the fluid in the removal means (12) such that the fill level lies within a second predefined range.

7. The system according to any of claims 2 to 6, further comprising a second pump (4) configured to convey the fluid, preferably under the control of the fill level controller, from the removal means (12) via a return pipe (41), preferably through a filter member (42) arranged in the return pipe (41), back into the piping system of the machine tool (2).

8. The system according to any of claims 2 to 7, wherein:
the removal means (12) is designed as a container (122) that is horizontally open at the top and is supported in such a manner on a rack (43) that is preferably movable that the catching vessel (112) of the receiving means (11) of the catching device (1) can be positioned below the workpiece discharge device (5) of the machine tool (2),
a first collecting vessel mount (123), in which the collecting vessel (121) is held so as to be at least partially filled with the fluid, is arranged in the container (122), and
a second collecting vessel mount (124), which is formed separately of the first collecting vessel mount (123) and in which the collecting vessel (121) can be placed, is arranged on a region of the container (122) situated further above than the first collecting vessel mount (123) so that fluid can flow back into the container (122).

9. The system according to any of claims 1 to 8, wherein the fluid with which the catching device (1) can at least partially be filled is the fluid used in the machine tool (2).

10. A catching device (1) for use in a system according to any of claims 1 to 8, comprising:
a fluid-fillable receiving means (11) having a catching vessel (112) that is horizontally open at the top, for catching workpieces (3) ejected from a separately provided machine tool (2), wherein the receiving means (11) can be filled with fluid such that workpieces (3) received therein are fully immersed in the fluid,
a removal means (12) for collecting the workpieces (3) which can be filled with the fluid, as well as
a connecting member (111) that can be filled with the fluid and is preferably of tubular design and which connects the receiving means (11) and the removal means (12) to each other in such a manner that the workpieces (3) caught in the receiving means (11) can be conveyed into the removal means (12) that is at least partially filled with fluid through an aperture provided in the catching vessel (112) via the connecting member (111) that is at least partially filled with fluid,
wherein the receiving means (11) comprises:
at least one stop (114) arranged in the connecting member (111), and
a closure (113) that is arranged upstream of the at least one stop (114) to close the aperture provided in the catching vessel (112),
wherein the at least one stop (114) and the closure (113) can be put alternatingly in an open and closed state such that the workpieces (3) and the fluid are held in the receiving means (11) by the closed state and are enabled to access the removal means (12) from the receiving means (11) by the open state.

11. The catching device (1) according to claim 10, wherein the removal means (12) comprises:
a container (122) that is horizontally open at the top and can be filled with the fluid, wherein the container (122) is supported on a rack (43) that is preferably movable and by means of which the catching vessel (112) of the receiving means (11) of the catching device (1) can be positioned below a workpiece discharge device (5) of the machine tool (2),
a collecting vessel (121) for collecting the workpieces (3) which is permeable to the fluid, wherein the collecting vessel (121) can be arranged in the container (122) in a first collecting vessel mount (123) such that the collecting vessel (121) is at least partially filled with the fluid in the container (122),
a second collecting vessel mount (124) that is formed separately of the first collecting vessel mount (123) and is arranged on a region of the container (122) situated further above than the first collecting vessel mount (123) and in which the collecting vessel (121) can be placed, so that fluid can flow back into the container (122),
wherein the removal means (12) and/or the collecting vessel (121) can be adjusted in height such that a distance (d) between a discharge aperture (1112) of the connecting member (111) facing the collecting vessel (121) and the workpieces (3) collected in the collecting vessel (121) can be changed, preferably automatically, depending on the number of workpieces (3) collected in the collecting vessel (121).

12. A method for catching workpieces (3) machined in a machine tool (2), using a catching device (1) according to claim 10 or 11 in a system according to any of claims 1 to 8, comprising:
machining at least one workpiece (3) in a machine tool (2),
discharging the at least one workpiece (3) from the machine tool (2),
catching the workpiece (3) ejected from the machine tool (2) in a catching vessel (112) of a receiving means (11) of a catching device (1), wherein the catching vessel (112) is filled with a fluid from a tank of the machine tool (2) such that the workpiece (3) is fully immersed in the fluid,
directing the workpiece (3) from the catching vessel (112) to a removal means (12) of the catching device (1) via a connecting member (111) of the catching device (1) that is preferably of tubular design,
collecting the workpieces (3) in a collecting vessel (121) in the removal means (12) which is at least partially filled with the fluid,
holding the at least one workpiece (3) and the fluid in the catching vessel (112) by a closure (113) after catching the workpiece (3) ejected from the machine tool (2),
passing on at least one workpiece (3) from the catching vessel (112) into the connecting member (111) by opening the closure (113) depending on the number of workpieces (3) received in the catching vessel (112), for further conveyance toward the collecting vessel (121),
holding the at least one workpiece (3) and the fluid in the connecting member (111) via at least one stop (114),
passing on the at least one workpiece (3) from the connecting member (111) into the collecting vessel (121) by opening the at least one stop (114) depending on the actuation of the closure (113),
adapting, preferably automatically, a distance (d) between a discharge aperture (1112) of the connecting member (111) and the workpieces (3) collected in the collecting vessel (121), depending on the number of workpieces (3) collected in the collecting vessel (121),
removing the collecting vessel (121), which is supported in a first collecting vessel mount (123) arranged in the removal means (12) and which is at least partially filled with the fluid, with the workpieces (3) collected therein from the first collecting vessel mount (123),
transferring, preferably automatically, the collecting vessel (121) removed from the first collecting vessel mount (123) to a second collecting vessel mount (124) in which the fluid can drip off from the collecting vessel (121) back into the removal means (12), and
further conveying the collecting vessel (121) filled with workpieces (3) from the second collecting vessel mount (124) to a downstream machining means.

## Revendications

1. Système présentant :
une machine-outil (2) qui comprend un dispositif de sortie de pièces à usiner (5) destiné à la sortie de pièces à usiner (3) qui ont été traitées dans la machine-outil (2) ;
un réservoir destiné à un fluide utilisé dans la machine-outil (2), que l'on utilise dans la machine-outil (2) à titre de moyen de refroidissement, de graissage et/ou de traitement, de préférence à titre d'huile de coupe ;
un système de canalisation pour le fluide que l'on utilise dans la machine-outil (2) ;
une première pompe destinée à la mise en circulation du fluide dans le système de canalisation ; de même que
un dispositif de récolte (1) qui comprend :
un mécanisme de réception (11) qui peut être rempli avec un fluide, destiné à la récolte de pièces à usiner (3) qui sont éjectées à partir de la machine-outil (2) ;
un mécanisme de prélèvement (12) qui peut être rempli avec le fluide, destiné à rassembler des pièces à usiner (3) ; ainsi que
un élément de liaison (111) qui peut être rempli avec le fluide, de préférence réalisé sous forme tubulaire ; dans lequel le mécanisme de réception (11) et le mécanisme de prélèvement (12) sont reliés l'un à l'autre par l'intermédiaire de l'élément de liaison (111) ;
le mécanisme de réception (11) peut être rempli avec le fluide d'une manière telle que les pièces à usiner (3) qui sont éjectées hors de la machine-outil (2) sont complètement immergées dans le fluide qui est contenu dans le mécanisme de réception (11) ; et
les pièces à usiner (3) qui sont récoltées dans le mécanisme de réception (11) peuvent aboutir, par l'intermédiaire de l'élément de liaison (111) rempli au moins en partie avec du fluide, dans le mécanisme de prélèvement (12) rempli au moins en partie avec du fluide ;
dans lequel le mécanisme de réception (11) peut venir se disposer au moins en partie en dessous du dispositif de sortie des pièces à usiner (5) de la machine-outil (2) et présente au moins un verrou (114) disposé dans l'élément de liaison (111) et un récipient de récolte (112) destiné à la récolte des pièces à usiner (3) qui sont éjectées à l'extérieur du dispositif de sortie de pièces à usiner (5), qui comprend une ouverture de récolte (1121), qui dans la direction horizontale est ouverte vers le haut en direction du dispositif de sortie de pièces à usiner (5) et une fermeture (113) qui est disposée en amont par rapport audit au moins un verrou (114) à des fins de fermeture de l'ouverture que l'on prévoit dans le récipient de récolte (112) ;
dans lequel le récipient de récolte (112) peut être rempli avec le fluide à partir du réservoir de la machine-outil (2) par l'intermédiaire d'un tube de remplissage (51), d'une manière telle que les pièces à usiner (3) qui sont éjectées par le dispositif de sortie de pièces à usiner (5) sont complètement immergées dans le fluide qui est contenu dans le récipient de récolte (112) ; et
dans lequel ledit au moins un verrou (114) et la fermeture (113) peuvent être amenés en alternance dans un état ouvert et fermé, d'une manière telle que les pièces à usiner (3) et le fluide sont maintenus dans le mécanisme de réception (11) par l'intermédiaire de l'état fermé et peuvent aboutir, grâce à l'état ouvert du mécanisme de réception (11), dans le mécanisme de prélèvement (12).

2. Système selon la revendication 1, dans lequel :
l'élément de liaison (111) fait saillie par rapport au côté externe de la machine-outil (2) et, afin de guider les pièces à usiner (3) à l'extérieur du récipient de récolte (112) en direction du mécanisme de prélèvement (12), est incliné vers le bas ; et
l'élément de liaison (111) est relié, de préférence en une seule pièce, à son extrémité qui se tourne vers le récipient de récolte (112), au récipient de récolte (112), d'une manière telle que des pièces à usiner (3) qui se trouvent dans le récipient de récolte (112) peuvent aboutir, par l'intermédiaire d'une ouverture qui est prévue dans le récipient de récolte (112), dans l'élément de liaison (111).

3. Système selon la revendication 1, dans lequel la fermeture (113) est configurée d'une manière telle qu'elle s'ouvre et se ferme sous la commande d'un dispositif de comptage de la machine-outil (2), et ledit au moins un verrou (114) est configuré pour s'ouvrir et se fermer en conformité avec le verrou (113) ;
dans lequel l'ouverture et la fermeture de la fermeture (113) et dudit au moins un verrou (114) peuvent être synchronisées l'une par rapport à l'autre d'une manière telle que ledit au moins un verrou (114) s'ouvre et se ferme en fonction de l'ouverture et de la fermeture de la fermeture (113), à des fins de transport, en particulier de manière cyclique, des pièces à usiner (3) qui sont éjectées de la machine-outil (2) pour pénétrer dans le mécanisme de réception (11), par l'intermédiaire de l'élément de liaison (111), jusque dans le mécanisme de prélèvement (12).

4. Système selon l'une quelconque des revendications 2 ou 3, dans lequel le mécanisme de prélèvement (12) présente un récipient de récolte (121) destiné à la récolte des pièces à usiner (3) qui tombent dans le récipient de récolte (121) à partir d'une ouverture de sortie (1112) réalisée dans l'extrémité de l'élément de liaison (111), située en aval, dans lequel le récipient de récolte (121) est réalisé au moins en partie pour être perméable au fluide.

5. Système selon l'une quelconque des revendications 2 à 4, dans lequel le mécanisme de prélèvement (12) et/ou le récipient de récolte (121) qui y est logé, peuvent être réglés en hauteur de préférence par l'intermédiaire d'un mécanisme de levage, en particulier actionné de manière automatique, d'une manière telle qu'une distance (d) entre l'ouverture de sortie (1112) et les pièces à usiner (3) qui sont rassemblées dans le récipient de récolte (121) peut être modifiée, de préférence de manière automatique, en fonction du nombre de pièces à usiner (3) qui sont rassemblées dans le récipient de récolte (121).

6. Système selon l'une quelconque des revendications 2 à 5, qui présente en outre :
un dispositif de réglage du niveau, qui est configuré pour régler un niveau du fluide dans le récipient de récolte (112) d'une manière telle que le niveau se situe au sein d'une plage qui a été prédéfinie et/ou dans le but de régler un niveau du fluide dans le mécanisme de prélèvement (12) d'une manière telle que le niveau se situe au sein d'une plage qui a été prédéfinie.

7. Système selon l'une quelconque des revendications 2 à 6, qui présente en outre :
une deuxième pompe (4) qui est configurée pour transporter le fluide, de préférence sous la commande du dispositif de réglage du niveau, à partir du mécanisme de prélèvement (12) par l'intermédiaire d'un tube de retour (41), de préférence par l'intermédiaire d'un élément de filtration (42) qui est disposé dans le tube de retour (41), en retour dans le système de canalisation de la machine-outil (2).

8. Système selon l'une quelconque des revendications 2 à 7, dans lequel :
le mécanisme de prélèvement (12) est réalisé sous la forme d'un conteneur horizontal (122) ouvert vers le haut, qui est monté sur un support (43) de préférence mobile, d'une manière telle que le récipient de récolte (112) du mécanisme de réception (11) du dispositif de récolté (1) peut être positionné en dessous du dispositif de sortie des pièces à usiner (5) de la machine-outil (2) ;
un premier dispositif de maintien (123) du récipient de récolte est disposé dans le conteneur (122) dans lequel est maintenu le récipient de récolte (121) d'une manière telle que ce dernier est traversé au moins en partie par le fluide ; et
un deuxième dispositif de maintien (124) du récipient de récolte, réalisé séparément par rapport au premier dispositif de maintien (123) du récipient de récolte est disposé dans une zone du conteneur (122) qui est située plus haut que le premier dispositif de maintien (123) du récipient de récolte, dans lequel le récipient de récolte (121) peut être déposé d'une manière telle que du fluide peut s'écouler en retour jusque dans le conteneur (122).

9. Système selon l'une quelconque des revendications 1 à 8, dans lequel le fluide avec lequel le dispositif de récolte (1) peut être rempli au moins en partie, représente le fluide qui est utilisé dans la machine-outil (2).

10. Dispositif (1) destiné à une utilisation dans un système selon l'une quelconque des revendications 1 à 8, qui présente :
un mécanisme de réception (11) qui peut être rempli avec un fluide, comprenant un récipient de récolte horizontal (112) qui est ouvert vers le haut, pour la récolte des pièces à usiner (3) qui sont éjectées à partir d'une machine-outil (2), que l'on prévoit de manière séparée, dans lequel le mécanisme de réception (11) peut être rempli avec du fluide d'une manière telle que les pièces à usiner (3) qui y ont été récoltées sont complètement immergées dans le fluide ;
un mécanisme de prélèvement (12) qui peut être rempli avec le fluide, destiné à récolter les pièces à usiner (3) ; de même que
un élément de liaison (111) qui peut être rempli avec le fluide, de préférence réalisé sous forme tubulaire, qui relie le mécanisme de réception (11) et le mécanisme de prélèvement (12) l'un à l'autre d'une manière telle que les pièces à usiner (3) qui ont été récoltées dans le mécanisme de réception (11) peuvent être transportées à travers une ouverture qui est prévue dans le récipient de récolte (112) par l'intermédiaire de l'élément de liaison (111) qui est rempli au moins en partie avec du fluide, jusque dans le mécanisme de prélèvement (12) qui est rempli au moins en partie avec du fluide ;
dans lequel le mécanisme de réception (11) présente :
au moins un verrou (114) qui est disposé dans l'élément de liaison (111) ; et
une fermeture (113) qui est disposée en amont par rapport audit au moins un verrou (114), qui est destiné à la fermeture de l'ouverture qui est prévue dans le récipient de récolte (112) ;
dans lequel ledit au moins un verrou (114) et la fermeture (113) peuvent être amenés en alternance dans un état ouvert et fermé, d'une manière telle que les pièces à usiner (3) et le fluide sont maintenus dans le mécanisme de réception (11) par l'intermédiaire de l'état fermé et peuvent aboutir, grâce à l'état ouvert du mécanisme de réception (11), dans le mécanisme de prélèvement (12).

11. Dispositif de récolte (1) selon la revendication 10, dans lequel le mécanisme de prélèvement (12) présente :
un conteneur (122) qui, à l'horizontale, est ouvert vers le haut et qui peut être rempli avec le fluide, dans lequel le conteneur (122) est monté sur un support (43) de préférence mobile, au moyen duquel le récipient de récolte (112) du mécanisme de réception (11) du dispositif de récolte (1) peut venir se positionner en dessous d'un dispositif de sortie de pièces à usiner (5) de la machine-outil (2) ;
un récipient de récolte (121) qui est perméable par rapport au fluide, destiné à rassembler les pièces à usiner (3), dans lequel le récipient de récolte (121) peut venir se disposer dans le conteneur (122) dans un premier dispositif de maintien (123) du récipient de récolte, d'une manière telle que le récipient de récolte (121) est traversé au moins en partie par le fluide dans le conteneur (122) ;
un deuxième dispositif de maintien (124) du récipient de récolte, qui est réalisé séparément par rapport au premier dispositif de maintien (123) du récipient de récolte, qui est disposé dans une zone du conteneur (122) qui est située plus haut que le premier dispositif de maintien (123) du récipient de récolte, et dans lequel le récipient de récolte 121) peut être déposé, d'une manière telle que du fluide peut s'écouler en retour jusque dans le conteneur (122) ;
dans lequel le mécanisme de prélèvement (12) et/ou le récipient de récolte (121) sont réglables en hauteur d'une manière telle qu'une distance (d) entre une ouverture de sortie (1112) de l'élément de liaison (111), qui est orientée en direction du récipient de récolte (121), et les pièces à usiner (3) qui ont été rassemblées dans le récipient de récolte (121), peut être modifiée, de préférence de manière automatique, en fonction du nombre des pièces à usiner (3) qui ont été rassemblées dans le récipient de récolte (121).

12. Procédé de récolte destiné à des pièces à usiner (3) qui sont traitées dans une machine-outil (2) avec l'utilisation d'un dispositif de récolte (1) selon la revendication 10 ou 11 dans un système selon l'une quelconque des revendications 1 à 8, qui présente :
le traitement d'au moins une pièce à usiner (3) dans une machine-outil (2) ;
l'évacuation de ladite au moins une pièce à usiner (3) à l'extérieur de la machine-outil répond (2) ;
la récolte de la pièce à usiner (3) qui est éjectée à partir de la machine-outil (2), dans un récipient de récolte (112) d'un mécanisme de réception (11) d'un dispositif de récolte (1), dans lequel le récipient de récolte (112) est rempli avec un fluide à partir d'un réservoir de la machine-outil (2), d'une manière telle que la pièce à usiner (3) est complètement immergée dans le fluide ;
le guidage de la pièce à usiner (3) à partir du récipient de récolte (112), par l'intermédiaire d'un élément de liaison (111) du dispositif de récolte (1), réalisé de préférence sous forme tubulaire, en direction d'un mécanisme de prélèvement (12) du dispositif de récolte (1) ;
le rassemblement des pièces à usiner (3) dans un récipient de récolte (121) dans le mécanisme de prélèvement (12), qui est rempli au moins en partie avec le fluide ;
le maintien de ladite au moins une pièce à usiner (3) et du fluide dans le récipient de récolte (112) par l'intermédiaire d'une fermeture (113) après la récolte de la pièce à usiner (3) qui a été éjectée à partir de la machine-outil (2) ;
la poursuite du guidage de ladite au moins une pièce à usiner (3) à l'extérieur du récipient de récolte (112) jusque dans l'élément de liaison (111) par l'intermédiaire de l'ouverture de la fermeture (113) en fonction du nombre des pièces à usiner (3) qui ont été récupérées dans le récipient de récolte (112), pour la poursuite du transport dans la direction du récipient de récolte (121) ;
le maintien de ladite au moins une pièce à usiner (3) et du fluide dans l'élément de liaison (111) par l'intermédiaire d'au moins un verrou (114) ;
la poursuite du guidage de ladite au moins une pièce à usiner (3) à l'extérieur de l'élément de liaison (111) jusque dans le récipient de récolte (121) par l'intermédiaire de l'ouverture dudit au moins un verrou (114) en fonction de l'activation de la fermeture (113) ;
l'adaptation d'une distance (d) entre une ouverture de sortie (1112) de l'élément de liaison (111) et les pièces à usiner (3) qui ont été rassemblées dans le récipient de récolte (121), de préférence de manière automatique, en fonction du nombre des pièces à usiner (3) qui ont été rassemblées dans le récipient de récolte (121) ;
le prélèvement, à partir du premier dispositif de maintien (123) du récipient de récolte, du récipient de récolte (121) avec les pièces à usiner (3) qui y ont été rassemblées, qui est traversé au moins en partie par le fluide et qui est monté dans un premier dispositif de maintien (123) du récipient de récolte disposé dans le mécanisme de prélèvement (12) ;
le transfert, de préférence de manière automatique, du récipient de récolte (121) qui a été prélevé à partir du premier dispositif de maintien (123) du récipient de récolte, à un deuxième dispositif de maintien (124) du récipient de récolte, dans lequel le fluide peut s'écouler goutte-à-goutte à partir du récipient de récolte (121) en retour jusque dans le mécanisme de prélèvement (12) ; et
la poursuite du transport du récipient de récolte (121) qui est rempli avec les pièces à usiner (3), à partir du deuxième dispositif de maintien (124) du dispositif de récolte jusqu'à un mécanisme de traitement qui est monté à la suite.
